# EUROPÄISCHE PATENTSCHRIFT

(11) **EP 3 525 567 B1**
(45) Veröffentlichungstag und Bekanntmachung des Hinweises auf die Patenterteilung: **19.08.2020**
(21) Anmeldenummer: 17793834.7
(22) Anmeldetag: 11.10.2017
(51) Int. Cl.: A01C 7/08, A01C 7/10

(54) **PNEUMATISCHE VERTEILMASCHINE UND VERFAHREN ZUR STEUERUNG ODER REGELUNG DEREN DOSIERORGANE MITTELS DURCHFÜHRUNG VON ABDREHPROBEN**
PNEUMATIC DISTRIBUTION MACHINE AND METHOD FOR THE OPEN-LOOP OR CLOSED-LOOP CONTROL OF THE DOSING ELEMENTS THEREOF BY CARRYING OUT CALIBRATION TESTS
MACHINE D'ÉPANDAGE PNEUMATIQUE ET PROCÉDÉ DE COMMANDE OU DE RÉGLAGE DE SON ORGANE DE DOSAGE PAR L'ÉCHANTILLONNAGE D'ÉTALONNAGE

(30) Priorität: 14.10.2016 DE 102016012254
(43) Veröffentlichungstag der Anmeldung: 21.08.2019
(73) Patentinhaber: RAUCH Landmaschinenfabrik GmbH, 76547 Sinzheim (DE)
(72) Erfinder: KLEIN, Frédéric, 67000 Strasbourg (FR); SCHÄFER, Fabian, 76473 Iffezheim (DE); RAUCH, Norbert, 76547 Sinzheim (DE)
(74) Vertreter: Lichti - Patentanwälte Partnerschaft mbB
(86) Internationale Anmeldenummer: PCT/EP2017/001203
(87) Internationale Veröffentlichungsnummer: WO 2018/068896

(56) Entgegenhaltungen:
- EP-B1- 2 420 121
- CA-A1- 2 311 698
- DE-U1- 29 613 866

## Beschreibung

Die Erfindung betrifft ein Verfahren zur Steuerung und/oder Regelung eines Dosierorgans einer pneumatischen Verteilmaschine, umfassend
- wenigstens eine dem Dosierorgan nachgeordneten Übergabekammer zur Überführung von mittels des Dosierorgans dosiertem Verteilgut in wenigstens eine Förderleitung;
- wenigstens ein Gebläse zur Beaufschlagung der Förderleitung mit einem Luftstrom; und
- wenigstens ein der Förderleitung nachgeordnetes Verteilorgan,
   wobei wenigstens eine Abdrehprobe durchgeführt wird, indem das mit einem bestimmten Verteilguttyp beaufschlagte Dosierorgan über einen vorherbestimmten Probenahmezeitraum mit einem vorherbestimmten Betriebsparameter betätigt und die während der Abdrehprobe dosierte Masse an Verteilgut mittels einer Wiegeeinrichtung (100) gravimetrisch erfasst wird, wonach aus der derart erhaltenen Masse an Verteilgut bezogen auf den Probenahmezeitraum und den Betriebsparameter des Dosierorgans eine funktionale Beziehung zwischen dem Betriebsparameter des Dosierorgans und dem hiermit dosierten Ist-Massenstroms an Verteilgut errechnet und das Dosierorgan sodann in Abhängigkeit dieser funktionalen Beziehung auf einen Soll-Massenstrom an Verteilgut gesteuert und/oder geregelt wird. Die Erfindung bezieht sich ferner auf eine insbesondere zur Durchführung eines solchen Verfahrens ausgebildete pneumatische Verteilmaschine, umfassend
- wenigstens ein Dosierorgan;
- wenigstens eine dem Dosierorgan nachgeordnete Übergabekammer zur Überführung von mittels des Dosierorgans dosiertem Verteilgut in wenigstens eine Förderleitung;
- wenigstens ein Gebläse zur Beaufschlagung der Förderleitung mit einem Luftstrom;
- wenigstens ein der Förderleitung nachgeordnetes Verteilorgan; und
- wenigstens eine Wiegeeinrichtung, welcher ein bestimmter auszubringender Verteilguttyp durch Betätigung des Dosierorgans über einen vorherbestimmten Probenahmezeitraum mit einem vorherbestimmten Betriebsparameter während einer Abdrehprobe zuführbar ist, um die derart dosierte Masse an Verteilgut gravimetrisch zu erfassen.

Pneumatische Verteilmaschinen der vorgenannten Art finden in der Landwirtschaft zum Ausbringen von vornehmlich pulver- oder partikelförmigem Verteilgut, wie insbesondere Saatgut und/oder Dünger, verbreitet Verwendung. Dabei wird das in der Regel in einem Behälter auf Vorrat gehaltene Verteilgut mittels eines oder mehreren, üblicherweise unterhalb einer Auslauföffnung des Behälters angeordneten Dosierorgans bzw. -organe dosiert und wird der dosierte Massenstrom an Verteilgut an eine Mehrzahl an dem Dosierorgan nachgeordneten Verteilorganen überführt. Zur Überführung des Verteilgutes an die Verteilorgane dient ein Gebläse, welches die erzeugte Förderluft in eine Förderleitung einspeist, in deren Innern - und in der Regel in einem Leitungsabschnitt derselben unterhalb des Dosierorgans - sich eine Übergabekammer befindet, um den mittels des Dosierorgans dosierten Verteilgutstrom in den in der Förderleitung strömenden Förderluftstrom einzudispergieren und zu fluidisieren. Zu letztgenanntem Zweck ist die Förderleitung im Bereich der Übergabekammer häufig, wenngleich nicht notwendigerweise, mit einem sogenannten Injektor ausgestattet, welcher eine stromauf der Übergabekammer in der Förderleitung angeordnete Düse und einen stromab der Übergabekammer in der Förderleitung angeordneten Diffusor nach Art einer Expansionsdüse umfasst. Die Übergabekammer ist in diesem Fall folglich zwischen der Düse und dem Diffusor gebildet. Insbesondere im Falle von sogenannten Drillmaschinen mündet die Förderleitung stromab der Übergabekammer schließlich in eine Verteileinheit, welche beispielsweise in Form eines Verteilerkopfes ausgestaltet ist und eine Mehrzahl an Abgängen aufweist. Letztere sind in der Regel um den Umfang der Verteileinheit verteilt angeordnet und schließt sich hieran je eine Verteilerleitung an, welche dazu dient, den Verteilgutstrom in der Anzahl an Verteilerleitungen entsprechenden Teilströmen je einem Verteilorgan zuzuführen, welche je nach gewünschter Arbeitsbreite mit unterschiedlichem Seitenabstand von der Verteilmaschine angeordnet sind. Darüber hinaus sind auch andere Arten von Verteileinheiten gebräuchlich, wie z.B. in Form von Zyklonen, welche die Verteilgutpartikel aus dem Förderluftstrom abtrennen und vornehmlich bei Verteilmaschinen in Form von Einzelkornsämaschinen zum Einsatz gelangen.

Handelt es sich bei der pneumatischen Verteilmaschine beispielsweise um einen Düngerstreuer, wie er z.B. aus der DE 10 2004 030 240 B4 bekannt ist, so können die Verteilorgane z.B. von am Ende der Verteilerleitungen befindlichen Prallplatten gebildet sein. Handelt es sich hingegen bei der pneumatischen Verteilmaschine beispielsweise um eine Sämaschine, so können die Verteilorgane z.B. Säscharen umfassen, um das Saatgut in den Boden einzubringen. Derartige Verteilmaschinen sind unter anderem aus den DE 44 34 963 A1, DE 197 47 029 A1 oder DE 10 2010 053 883 A1 bekannt.

Der insbesondere in seinem mit dem Verteilgut befüllten Zustand schwere Behälter ist bei bekannten pneumatischen Verteilmaschinen üblicherweise an einer Tragkonstruktion angeordnet, welche sich unterhalb des Behälters erstreckt und diesen abstützt. Die Tragkonstruktion kann dabei entweder von einem Dreipunkt-Kraftheber einer Zugmaschine, wie eines Traktors, aufgenommen werden, oder die Verteilmaschine ist als gezogene Maschine ausgebildet, welche sich ihrerseits während des Betriebs auf dem Boden abstützt. Das Gehäuse der Übergabekammer ist insbesondere dann, wenn es mit einem Injektor mit den jeweils in dieses einmündenden und üblicherweise koaxial angeordneten Düse und Diffusor ausgestattet ist, aus Platzgründen häufig quer zur Fahrtrichtung angeordnet (d.h. die Mittelachse von Düse und Diffusor erstreckt sich senkrecht zur Fahrtrichtung). Darüber hinaus sind insbesondere für große Arbeitsbreiten sogenannte Zwillingsausführungen bekannt, welche je einen zur Aufnahme des Verteilgutes dienenden Behälter sowie je ein pneumatisches Transportsystem der oben beschriebenen Art umfassen. Die Übergabekammer ist in diesem Fall in der Regel parallel zur Fahrtrichtung angeordnet.

Das oder die Dosierorgan(e) von pneumatischen Verteilmaschinen weisen je nach dem auszubringenden Verteilgut in der Regel Zellen- oder Nockenräder auf, welche hinsichtlich ihrer Betriebsparameter, wie insbesondere der Drehzahl, steuerbar und/oder regelbar sind, wobei es ferner bekannt ist, dass die Zellen- bzw. Nockenräder gegeneinander austauschbar sind, um die Verteilmaschine an verschiedene Verteilgüter anzupassen (vgl. z.B. die EP 2 786 649 A2). Indes können grundsätzlich auch mit aktuatorisch betätigbaren Dosierschiebern ausgestattete Dosierorgane zum Einsatz gelangen, welche mit einer Dosieröffnung zusammenwirken, wobei als Betriebsparameter solcher Dosierorgane die Relativposition des Dosierschiebers in Bezug auf die Dosieröffnung steuerbar und/oder regelbar ist.

Um das oder die Dosierorgan(e) von gattungsgemäßen pneumatischen Verteilmaschinen auf einen gewünschten Soll-Massenstrom an Verteilgut zu regeln, beschreibt beispielsweise die DE 10 2014 115 020 A1 ein Regelverfahren, bei welchem der Ist-Massenstrom der in den Förderluftstrom eindispergierten Verteilgutpartikel in der Förderleitung mittels eines Sensors, wie eines Piezosensors, erfasst und an eine Regeleinrichtung der Verteilmaschine übermittelt wird, welche eine Stellgröße in Abhängigkeit des Soll-Massenstroms bestimmt und die Dosierorgane dementsprechend auf den Soll-Massenstrom regelt. Hierbei soll ständig ein Korrekturfaktor als Verhältnis des Ist-Massenstroms in Bezug auf die Ist-Drehzahl bzw. -frequenz des Dosierorgans ermittelt werden, so dass der Soll-Massenstrom mit Hilfe des Korrekturfaktors in eine Soll-Drehzahl bzw. -frequenz des Dosierorgans umgewandelt werden kann. Die Regeleinrichtung ermittelt die auf das Dosierorgan wirkende Stellgröße - - hier: die Drehzahl bzw. -frequenz - in Abhängigkeit von einer Regelabweichung, welche als Differenz zwischen der Soll-Drehzahl und der Ist-Drehzahl bestimmt wird. Indes haben sich derartige Verfahren auf dem Marke bislang nicht durchsetzen können, weil die sensorische Erfassung des Ist-Massenstroms an fluidisierten Verteilgutpartikeln stark fehlerbehaftet und im Übrigen auch störungsanfällig ist, wobei bereits lokale Ablagerungen und/oder Verschmutzungen zu einem Versagen der Massenstromregelung führen können.

Entsprechendes gilt für die DE 100 37 713 A1, welche eine Verteilmaschine in Form einer Drillmaschine beschreibt, die ein Dosierorgan in Form eines Särades umfasst, welches das dosierte Saatgut in eine unterhalb des Dosierorgans angeordnete Übergabekammer dosiert, an welche sich eine mit einem Luftstrom beaufschlagte Förderleitung anschließt. Stromab des Dosierorgans ist eine in Form einer Lichtschranke, einer Sensoreinheit oder einer Pralleinrichtung ausgebildete Zähleinrichtung vorgesehen, welche eine Teilmenge des auszubringenden Saatgutes abzählt, um die gesamte Aussaatmenge in Abhängigkeit hiervon sowie der Arbeitsgeschwindigkeit zu regeln. Neben den vorgenannten, allgemein mit einer entsprechenden Sensorik verbundenen Nachteilen stellt sich hier ferner das Problem, dass die Zähleinrichtung nur mit einer geringen Teilmenge des zu dosierenden Gesamtmassenstroms an Verteilgut beaufschlagt werden kann, damit die Verteilgutpartikel eine abzählbare Lage bilden können. Aufgrund der üblicherweise nicht linearen Abhängigkeit des dosierten Massenstroms bezogen auf die Drehzahl des Dosierorgans ergeben sich folglich Streufehler beim Ausbringen des (gesamten) Soll-Massenstroms an Verteilgut.

In der Praxis bedient man sich daher nach wie vor der Durchführung von Abdrehproben, indem das mit einem bestimmten Verteilguttyp beaufschlagte Dosierorgan über einen vorherbestimmten Probenahmezeitraum mit einem vorherbestimmten Betriebsparameter - üblicherweise der Drehzahl des als Zellen- oder Nockenrad ausgestalteten Dosierorgans - betätigt und die während der Abdrehprobe dosierte Masse an Verteilgut gravimetrisch erfasst wird. Aus der derart erhaltenen Masse an Verteilgut bezogen auf den Probenahmezeitraum und den Betriebsparameter des Dosierorgans kann sodann eine funktionale Beziehung zwischen dem Betriebsparameter des Dosierorgans und dem hiermit dosierten Massenstrom an Verteilgut errechnet und das Dosierorgan anschließend in Abhängigkeit dieser funktionalen Beziehung auf einen Soll-Massenstrom an Verteilgut gesteuert und/oder geregelt werden. Dabei ist es für die Abdrehprobe essentiell, dass das gesamte, während ihrer Durchführung dosierte Verteilgut aufgefangen werden kann und nicht etwa Anteile desselben, z.B. in Bauteilen der Verteilmaschine, zurückbleiben, um für eine hohe Genauigkeit der Einstellung des Dosierorgans beim späteren Arbeitsgang des Düngens/Säens zu sorgen und auch als "Abdrehfehler" bezeichnete Fehldosierungen, insbesondere Überdosierungen, infolge anlässlich der Abdrehprobe nur teilweise aufgefangenen Verteilgutes sowohl aus wirtschaftlichen Gründen als auch aus Umweltschutzgründen zu vermeiden.

Während in vielen Fällen derartige Abdrehproben vor Beginn der Verteilarbeit manuell durchgeführt werden, indem das Dosierorgan in der obigen Weise betätigt und das während der Abdrehprobe dosierte Verteilgut in einem unterhalb des Dosierorgans zu platzierenden Probenahmebehälter aufgefangen wird, wonach der Probenahmebehälter mit der aufgefangenen Masse an Verteilgut manuell gewogen und ein die gewünschte Verteilmenge an Verteilgut pro Dosierzeit identifizierender Kennwert einer Steuereinrichtung der Verteilmaschine eingegeben wird (vgl. z.B. die EP 0 635 195 A1, DE 44 31 288 A1, EP 2 022 308 A1, DE 10 2007 044 178 A1 oder DE 20 2014 009 404 U1), ist eine solche Vorgehensweise einerseits für den Landwirt relativ aufwändig, andererseits lässt die hierdurch erzielte Dosiergenauigkeit oft zu wünschen übrig, weil sich der Ist-Massenstrom desselben Verteilgutes bei gleichbleibender Drehzahl des Dosierorgans während der fortschreitenden Verteilarbeit verändern kann, wie insbesondere infolge von Feuchtigkeit. Überdies bedeutet eine manuelle Eingabe von Werten in die Steuereinrichtung grundsätzlich eine hohe Fehleranfälligkeit.

Es sind daher auch gattungsgemäße pneumatische Verteilmaschinen bekannt, bei welchen die Abdrehproben einerseits in automatisierter Form, andererseits zu verschiedenen Zeitpunkten während der Verteilarbeit durchgeführt werden können, wie beispielsweise während des Wendens der Verteilmaschine im Vorgewende etc., um die funktionale Beziehung zwischen der Drehzahl des Dosierorgans und dem hiermit dosierten Ist-Massenstrom an Verteilgut stets aktuell zu halten und folglich für eine fortwährend hohe Dosiergenauigkeit zu sorgen.

So beschreibt beispielsweise die DE 101 34 991 A1 eine pneumatische Drillmaschine mit einem Saatgutbehälter, einem in Form eines Zellenrades ausgestalteten Dosierorgan sowie einer Zähleinrichtung für die Auszählung der Verteilgutpartikel, welche anlässlich automatisierter Abdrehproben dosiert worden sind. Die Zähleinrichtung ist als pneumatische Zähleinrichtung ausgebildet und umfasst ein Zellenrad mit in dessen Außenbereich mit Abstand voneinander angeordneten Bohrungen, eine die Verteilgutpartikel in die Bohrungen saugende Ansaugeinrichtung und eine Partikelabscheideeinrichtung, welche die angesaugten Partikel aus den Bohrungen abscheidet. Zwei Sensoren, welche jeweils in Drehrichtung des Zellenrades vor und hinter der Partikelabscheideeinrichtung angeordnet sind, dienen zum Zählen der während der Abdrehprobe dosierten Verteilgutpartikel, wobei das Ergebnis dieser Zählung an eine Regeleinrichtung übermittelt wird, welche das Dosierorgan entsprechend der gewünschten Verteilung regelt. Die Zähleinrichtung ist im Innern des Saatgutbehälters angeordnet, wobei in einem zwischen dem Dosierorgan und dem Verteilerkopf angeordneten Abschnitt der Förderleitung eine Weiche vorgesehen ist, welche während der Durchführung einer Abdrehprobe die dosierten Verteilgutpartikel zu der der Zähleinrichtung umleitet, wohingegen sie diese während der Verteilarbeit der in Form eines Verteilerkopfes ausgestalteten Verteileinheit zuleitet. Abgesehen von der in konstruktiver Hinsicht aufwändigen Ausgestaltung der Partikelzähleinrichtung besteht ein Nachteil insbesondere darin, dass sich die während einer Abdrehprobe zu der Zähleinrichtung im Kreislauf geführten Verteilgutpartikeln an vielen Stellen der Verteilmaschine anreichern bzw. zurückbleiben können, wie beispielsweise im Injektor oder in der Förderleitung selbst, so dass die Gefahr von Dosierfehlern besteht, wenn nicht alle Verteilgutpartikel gezählt werden können. Überdies gestaltet sich die Abdrehprobe als relativ zeitaufwändig.

Die EP 2 420 121 B1 beschreibt eine insbesondere in Form einer Sämaschine ausgestaltete pneumatische Verteilmaschine mit einem Vorratsbehälter zur Aufnahme des Verteilgutes, einem Dosierorgan und einer unterhalb desselben angeordneten Übergabekammer mit einem Injektor, welcher in eine Förderleitung für den fluidisierten Verteilgutstrom mündet. Darüber hinaus umfasst die Verteilmaschine einen unterhalb des Injektors angeordneten Wiegebehälter, welcher zum selektiven Wiegen eines dosierten Anteils an Verteilgut aus dem Vorratsbehälter während einer Abdrehprobe dient und mittels eines Kalibrierventils mit letzterem verbunden oder von diesem getrennt werden kann. Um eine Abdrehprobe durchzuführen, wird folglich das Kalibrierventil geöffnet, so dass das mittels einer vorgegebenen Umdrehungszahl des Dosierorgans dosierte Verteilgut in den Wiegebehälter fällt, wo seine Masse mittels einer Wiegezelle gravimetrisch erfasst wird. Während der Verteilarbeit ist das Kalibrierventil hingegen geschlossen, so dass das dosierte Verteilgut von dem Dosierorgan direkt dem Injektor aufgegeben wird. Als nachteilig erweist sich insbesondere, dass das in dem Wiegebehälter aufgefangene Verteilgut nach jeder Abdrehprobe mittels einer zusätzlichen Rückführleitung, welche mit einem zusätzlichen Gebläse versehen ist, in den Vorratsbehälter rezirkuliert werden muss. Zudem sollte das Gehäuse der Übergabekammer von pneumatischen Verteilmaschinen - sei es mit einem Injektor ausgestattet oder nicht - zur Erzielung eines möglichst geringen Schwerpunktes der Maschine und den Bestrebungen dahingehend, dem Vorratsbehälter ein möglichst großes Fassungsvermögen zu verleihen, grundsätzlich auf einem sehr tiefen Höhenniveau unterhalb des Dosierorgans angeordnet sein, was mit dem unterhalb des Injektors vorgesehenen Wiegebehälter einschließlich dessen Rückführleitung nur bedingt möglich ist. Um die Arbeitsgänge des Düngens und/oder Säens mit Arbeitsgängen der Bodenbearbeitung platzsparend miteinander kombinieren zu können, sind gattungsgemäße pneumatische Verteilmaschinen, insbesondere in Form sogenannter Drillmaschinen, ferner häufig mit aktiven oder passiven Bodenbearbeitungsgeräten, wie z.B. Packerwalzen, Kreiseleggen und dergleichen, ausgestattet, was den für den Wiegebehälter erforderlichen Bauraum zusätzlich einschränkt.

Der Erfindung liegt daher die Aufgabe zugrunde, eine pneumatische Verteilmaschine sowie ein Verfahren zur Steuerung und/oder Regelung deren Dosierorgans der eingangs genannten Art unter zumindest weitestgehender Vermeidung der vorgenannten Nachteile dahingehend weiterzubilden, dass eine automatisierte Durchführung von Abdrehproben mit hoher Genauigkeit sichergestellt ist.

In verfahrenstechnischer Hinsicht wird diese Aufgabe bei einem Verfahren zur Steuerung und/oder Regelung eines Dosierorgans einer pneumatischen Verteilmaschine der eingangs genannten Art dadurch gelöst, dass die während der Abdrehprobe dosierte Masse an Verteilgut stromab des Dosierorgans und stromauf der Übergabekammer oder in der Übergabekammer mittels der Wiegeeinrichtung (100) gravimetrisch erfasst wird, wonach dieses Verteilgut an die Förderleitung übergeben und ausgebracht wird.

In vorrichtungstechnischer Hinsicht sieht die Erfindung zur Lösung dieser Aufgabe bei einer pneumatischen Verteilmaschine der eingangs genannten Art ferner vor, dass die Wiegeeinrichtung stromab des Dosierorgans und stromauf der Übergabekammer, in oder an der Übergabekammer angeordnet ist, so dass die während der Abdrehprobe dosierte Masse an Verteilgut an die Förderleitung übergebbar und ausbringbar ist.

Die erfindungsgemäße Ausgestaltung macht aufgrund dessen, dass die gravimetrische Erfassung des anlässlich einer in automatisierter Weise durchgeführten Abdrehprobe dosierten Verteilgutes stromab des Dosierorgans und stromauf der Übergabekammer oder in derselben gewogen wird, wobei die Wiegeeinrichtung folglich gleichfalls stromab des Dosierorgans und stromauf der Übergabekammer oder in bzw. an der Übergabekammer selbst angeordnet ist, zunächst zusätzliche Rezirkulationsleitungen für das Verteilgut in dessen Vorratsbehälter zurück entbehrlich, so dass auch keine Gefahr einer Verunreinigung des dort auf Vorrat gehaltenen Verteilgutes besteht. Insbesondere wird aber die Gefahr infolge Dosierfehlern insoweit minimiert, als die gravimetrische Erfassung des Verteilgutes unmittelbar stromab des Dosierorgans erfolgt, so dass sichergestellt wird, dass das gesamte, anlässlich einer Abdrehprobe dosierte Verteilgut auch tatsächlich gewogen wird und nicht auf dem Weg zu einer mit Abstand von dem Dosierorgan vorgesehenen Wiegeeinrichtung, wie z.B. einer solchen im Innern des Behälters, teilweise infolge Ablagerungen in verschiedenen Bauteilen der pneumatischen Verteilmaschine unberücksichtigt bleibt. Hiermit geht auch eine Zeitersparnis einher, so dass die Abdrehprobe verhältnismäßig schnell und folglich auch bei sehr kurzen Unterbrechungen der Verteilarbeit durchgeführt werden kann. Die gravimetrische Erfassung des Verteilgutes kann dabei bei abgeschaltetem Gebläse geschehen, da letzteres für einen Transport des Verteilgutes von dem Dosierorgan zu der Wiegeeinrichtung nicht notwendigerweise benötigt wird. Ein besonderer Vorteil der erfindungsgemäßen Ausgestaltung besteht darüber hinaus darin, dass das anlässlich einer Abdrehprobe dosierte und gewogene Verteilgut anschließend über die Übergabekammer und die über die Förderleitung hieran anschließenden Verteilerleitungen, beispielsweise durch Einschalten des Gebläses, kontrolliert ausgebracht werden kann, so dass die während der Inbetriebnahme von gattungsgemäßen Verteilmaschinen - sei es zu Beginn der Verteilarbeit oder sei es nach Unterbrechungen derselben, wie beispielsweise bei der Fahrt aus dem Vorgewende ins Feldinnere - grundsätzlich vorhandenen Totzeiten (das von dem Dosierorgan dosierte Verteilgut muss mittels des angeschalteten Gebläses der Übergabekammer aufgegeben und von dort über die Förder- und Verteilerleitungen sowie, nachdem es gegebenenfalls eine Verteileinheit passiert hat, zu den Verteilorganen gelangen) überbrückt werden können.

Sofern die Verteilmaschine mehrere Dosierorgane mit je einer diesen nachgeordneten Übergabekammer aufweist, so kann selbstverständlich jedem Dosierorgan eine in der erfindungsgemäßen Weise ausgestaltete Wiegeeinrichtung nachgeordnet sein, um die Dosierorgane jeweils entsprechend der mittels der Abdrehproben erhaltenen funktionalen Beziehung zwischen dem Betriebsparameter des jeweiligen Dosierorgans und dem hiermit dosierten Ist-Massenstrom zu betreiben. Andererseits ist es indes auch denkbar, nur eine Wiegeeinrichtung zur Durchführung der Abdrehproben mittels der von einem der Dosierorgane dosierten Masse an Verteilgut vorzusehen und die übrigen, nicht mit einer Wiegeeinrichtung versehenen Dosierorgane entsprechend der hieraus erhaltenen funktionalen Beziehung zwischen dem Betriebsparameter des einen Dosierorgans und dem hiermit dosierten Ist-Massenstrom zu betreiben, indem die funktionale Beziehung folglich auf die übrigen Dosierorgane "übertragen" wird.

Damit die Verteilmaschine nach einer jeden Abdrehprobe den gewünschten Massenstrom an Verteilgut selbsttätig zu steuern und/oder zu regeln vermag, ohne dass die während der Abdrehprobe erfasste Masse an Verteilgut bzw. ein hierfür repräsentativer Wert manuell eingegeben werden muss, kann die Verteilmaschine vorzugsweise eine sowohl mit der Wiegeeinrichtung als auch mit dem Dosierorgan in Wirkverbindung stehende Steuer- und/oder Regeleinrichtung aufweisen, welche aus der mittels der Wiegeeinrichtung erfassten Masse an Verteilgut bezogen auf den Probenahmezeitraum und den Betriebsparameter des Dosierorgans, wie beispielsweise die Drehzahl, die Anzahl an Umdrehungen, die Anzahl an ausgeschütteten Zellen bzw. Nockentälern des Dosierrades oder dergleichen, während der Abdrehprobe zur Errechnung einer funktionalen Beziehung zwischen dem Betriebsparameter des Dosierorgans und dem hiermit dosierten Ist-Massenstrom an Verteilgut sowie zur anschließenden Steuerung und/oder Regelung des Dosierorgans in Abhängigkeit dieser funktionalen Beziehung auf einen Soll-Massenstrom an Verteilgut ausgebildet ist. Bei der funktionalen Beziehung kann es sich im Übrigen in als solcher bekannter Weise um einen Faktor, eine Kennlinie oder -kurve, ein Kennfeld oder dergleichen handeln.

Wie bereits angedeutet, sieht die Erfindung insbesondere vor, dass das während der Abdrehprobe dosierte Verteilgut
- stromab des Dosierorgans und stromauf der Übergabeammer gesammelt, seine Masse gravimetrisch erfasst und sodann der Übergabekammer aufgegeben wird; oder
- in der Übergabekammer bei von dieser entkoppelten und/ oder deaktiviertem Gebläse gesammelt und seine Masse gravimetrisch erfasst wird, wonach der Injektor mit dem Gebläse gekoppelt und/oder letzteres aktiviert wird,
so dass das während der Abdrehprobe dosierte Verteilgut in beiden Fällen zu Beginn der Verteilarbeit kontrolliert ausgebracht wird.

In vorrichtungstechnischer Hinsicht können zu diesem Zweck verschiede konstruktive Ausgestaltungen vorgesehen sein, wobei die Wiegeeinrichtung stets allseitig verschlossen bzw. "gekapselt" und/oder gänzlich im Innern der zwischen dem Dosierorgan und der Übergabekammer befindlichen Förderkomponenten untergebracht sein sollte, um das Verteilgut vor äußeren Einwirkungen zu schützen und das Messergebnis nicht zu verfälschen. So kann beispielsweise gemäß einer ersten vorteilhaften Ausführungsform vorgesehen sein, dass die Wiegeeinrichtung stromab des Dosierorgans und stromauf der Übergabekammer angeordnet ist, wobei das Verteilgut wahlweise entweder der Wiegeeinrichtung oder an dieser vorbei der Übergabekammer zuführbar ist. Die Wiegeeinrichtung ist folglich insbesondere parallel zu einer das Dosierorgan mit der Übergabekammer verbindenden Leitung angeordnet, aus welcher es wahlweise direkt an die Übergabekammer (während der Verteilarbeit) oder zunächst an die Wiegeeinrichtung (während einer Abdrehprobe) und von dort an die Übergabekammer (nach der Abdrehprobe zu Beginn der Verteilarbeit) überführt werden kann.

In diesem Zusammenhang kann gemäß einer Ausführungsvariante vorgesehen sein, dass die Wiegeeinrichtung einen Wiegebehälter umfasst, welcher mittels einer in einem das Dosierorgan mit der Übergabekammer verbindenden Leitung angeordneten Weiche wahlweise mit dem Dosierorgan verbindbar oder von diesem trennbar ist, wobei der Wiegebehälter insbesondere
- wenigstens eine in seinem Innern angeordnete Wiegezelle aufweist; oder
- von der das Dosierorgan mit der Übergabekammer verbindenden Leitung mechanisch entkoppelt ist und mit einer äußeren Bahälterwaage in Verbindung steht.

Wie bereits erwähnt, wird die z.B. nach Art einer Leitklappe ausgebildete Weiche folglich während einer Abdrehprobe so gestellt, dass sie die dosierten Verteilgutpartikel direkt dem Wiegebehälter zuleitet, wobei die Verteilgutpartikel nach dem dortigen Wiegen zu Beginn der Verteilarbeit, beispielsweise mittels einer in eine Öffnungs- und in eine Schließstellung versetzbaren Klappe, von dem Wiegebehälter in den Injektor überführt werden, während die Weiche die Verteilgutpartikel während der Verteilarbeit an dem Wiegebehälter vorbei direkt an die Übergabekammer übergibt, so dass die Verteilgutpartikel den Wiegebehälter nicht passieren müssen. Im Falle eines mit einer äußeren Behälterwaage in Verbindung stehenden Wiegebehälters kann dessen mechanische Entkopplung einerseits von der das Dosierorgan mit der Übergabekammer verbindenden, mit der Weiche versehenen Leitung, andererseits von der zu öffnenden und zu schließenden Verbindung des Wiegebehälters mit der Übergabekammer beispielsweise in als solcher bekannter Weise mittels flexibler Leitungsstücke, z.B. aus elastisch nachgiebigen Materialien, wie Silikon, Gummi etc., aus nachgiebig biegeschlaffen Materialien, wie (Filter)geweben und dergleichen, mittels Bälgen etc., erfolgen.

Gemäß einer weiteren Ausführungsvariante kann in diesem Zusammenhang vorgesehen sein, dass die Wiegeeinrichtung einen Wiegebehälter mit wenigstens einer in seinem Innern angeordneten Wiegezelle aufweist und in Bezug auf eine das Dosierorgan mit der Übergabekammer verbindende Leitung zwischen wenigstens einer Wiegeposition, in welcher diese Leitung in den Wiegebehälter mündet, und wenigstens einer Übergabeposition, in welcher der Wiegebehälter in die Übergabekammer mündet, schwenkbar gelagert ist, wobei die Übergabekammer insbesondere
- an einem Drehschieber angeordnet ist, mittels welchem sie zwischen der wenigstens einen Wiegeposition, in welcher sie außerhalb der sie mit dem Dosierorgan verbindenden Leitung angeordnet ist, und der wenigstens einen Übergabeposition, in welcher sowohl der Wiegebehälter als auch die das Dosierorgan mit der Übergabekammer verbindende Leitung in sie einmündet, drehbar ist; oder
- ihrerseits in Bezug auf die sie mit dem Dosierorgan verbindende Leitung zwischen der wenigstens einen Wiegeposition, in welcher sie von der sie mit dem Dosierorgan verbindenden Leitung fort verschwenkt ist, und der wenigstens einen Übergabeposition, in welcher sowohl der Wiegebehälter als auch die das Dosierorgan mit der Übergabekammer verbindende Leitung in sie einmündet, schwenkbar gelagert ist.

Im erstgenannten Fall kann die Übergabekammer folglich mittels des Drehschiebers aus ihrer Betriebsposition, in welcher sie über die Leitung mit dem Dosierorgan verbunden ist, in die Wiegeposition gedreht werden, in welcher sie außerhalb der sie in der Betriebsposition mit dem Dosierorgan verbindenden Leitung angeordnet ist. In der Betriebsposition wiederum kann der z.B. schwenkbar am Umfang der Leitung angelenkte Wiegebehälter mit der das Dosierorgan in der Betriebsposition mit der Übergabekammer verbindenden Leitung verbunden werden, indem er in deren Querschnitt hinein verschwenkt wird, so dass die Abdrehprobe durchgeführt werden kann. Anschließend wird der Wiegebehälter wieder aus seiner Wiegeposition fort verschwenkt und wird die Übergabekammer mittels des Drehschiebers in die insbesondere ihrer Betriebsstellung entsprechende Übergabestellung gedreht, in welcher einerseits das mittels des Dosierorgans dosierte Verteilgut in die Übergabekammer hinein gelangen kann und in welcher andererseits das in dem Wiegebehälter aufgenommene Verteilgut in die Übergabekammer überführt werden kann. Letzteres kann wiederum z.B. mittels einer Verschlussklappe geschehen, in deren geöffnetem Zustand das Verteilgut zu Beginn der Verteilarbeit nach der Abdrehprobe aus dem Wiegebehälter in die Übergabekammer fällt.

Im letztgenannten Fall sind sowohl der Wiegebehälter als auch die Übergabekammer, z.B. an im Wesentlichen entgegengesetzten Schwenklagern am Umfang der das Dosierorgan in der Betriebsposition mit der Übergabekammer verbindenden Leitung, schwenkbar an dieser Leitung angelenkt, so dass sie durch Verschwenken jeweils mit der Leitung verbunden werden können, um eine Abdrehprobe durchzuführen oder das Verteilgut anlässlich der Verteilarbeit auszubringen. Nach Beendigung der Abdrehprobe wird die Übergabekammer folglich in ihre insbesondere der Betriebsposition entsprechende Übergabeposition verschwenkt, in welcher das in dem Wiegebehälter aufgenommene Verteilgut in die Übergabekammer überführt werden kann. Dies kann wiederum z.B. mittels einer Verschlussklappe geschehen, in deren geöffnetem Zustand das Verteilgut zu Beginn der Verteilarbeit nach der Abdrehprobe aus dem Wiegebehälter in die Übergabekammer fällt.

Gemäß einer weiteren Ausführungsvariante kann vorgesehen sein, dass die Wiegeeinrichtung einen Wiegebehälter mit wenigstens einer in seinem Innern angeordneten Wiegezelle aufweist und sowohl die Übergabekammer als auch der Wiegebehälter an einem, insbesondere im Wesentlichen senkrecht zu einer das Dosierorgan mit der Übergabekammer verbindenden Leitung wirksamen, Linearschieber angeordnet sind, wobei die Übergabekammer und der Wiegebehälter zwischen wenigstens einer Wiegeposition, in welcher die das Dosierorgan mit der Übergabekammer verbindende Leitung in den Wiegebehälter mündet und die Übergabekammer außerhalb des Querschnittes dieser Leitung angeordnet ist, und wenigstens einer Betriebsposition, in welcher die das Dosierorgan mit der Übergabekammer verbindende Leitung in die Übergabekammer mündet und der Wiegebehälter außerhalb des Querschnittes dieser Leitung angeordnet ist, verlagerbar sind, und wobei ferner der Wiegebehälter, insbesondere mittels einer Klappe, wahlweise mit der Übergabekammer verbindbar und von dieser trennbar ist. Die Übergabekammer und der Wiegebehälter können in diesem Fall folglich mittels des Linearschiebers, insbesondere gemeinsam, verlagert werden, um zur Durchführung einer Abdrehprobe entweder den Wiegebehälter mit dem Dosierorgan oder bei der Verteilarbeit die Übergabekammer mit dem Dosierorgan zu verbinden. Die Überführung des nach einer Abdrehprobe in dem Wiegebehälter aufgenommenen Verteilgutes in die Übergabekammer kann wiederum z.B. mittels einer Verschlussklappe geschehen, in deren geöffnetem Zustand das Verteilgut zu Beginn der Verteilarbeit aus dem Wiegebehälter in die Übergabekammer fällt.

Bei allen vorgenannten Ausführungsvarianten kann die Überführung des anlässlich einer Abdrehprobe dosierten Verteilgutes aus dem Wiegebehälter in die Übergabekammer vorzugsweise mittels Gravitation erfolgen, indem der Wiegebehälter zumindest in seiner Übergabeposition auf einem entsprechenden Höhenniveau zumindest teilweise oberhalb der Übergabekammer angeordnet ist. Alternativ oder zusätzlich ist es beispielsweise auch denkbar, dass die Überführung des anlässlich einer Abdrehprobe dosierten Verteilgutes aus dem Wiegebehälter in die Übergabekammer mittels des von dem Gebläse erzeugten Luftstromes erfolgt, indem das Verteilgut z.B. aus dem Wiegebehälter in die Übergabekammer gesaugt wird.

Gemäß einer alternativen Ausführungsvariante, welche ohne einen separaten Wiegebehälter auskommt, kann beispielsweise auch vorgesehen sein, dass die Wiegeeinrichtung
- eine in der das Dosierorgan mit der Übergabekammer verbindenden Leitung angeordnete Klappe aufweist, welche zwischen einer Wiegeposition, in welche sie den Leitungsquerschnitt verschließt, und einer Betriebsposition, in welcher sie den Leitungsquerschnitt zumindest teilweise freigibt, verschwenkbar ist, wobei die Klappe mit einer Wiegezelle und/oder ihre Schwenkachse mit einem Drehmoment- oder Torsionssensor ausgestattet ist; oder
- einen in der das Dosierorgan mit der Übergabekammer verbindenden Leitung angeordneten Schieber aufweist, welcher zwischen einer Wiegeposition, in welcher er den Leitungsquerschnitt verschließt, und einer Betriebsposition, in welcher er den Leitungsquerschnitt zumindest teilweise freigibt, verlagerbar ist, wobei der Schieber mit einer Wiegezelle ausgestattet ist.

Das anlässlich einer Abdrehprobe dosierte Verteilgut wird folglich bei geschlossener Klappe bzw. bei geschlossenem Schieber direkt in der das Dosierorgan mit der Übergabekammer verbindenden Leitung aufgefangen, um seine Masse gravimetrisch zu erfassen, wonach die Klappe geöffnet bzw. der Schieber aus der Leitung ausgezogen wird, um das aufgefangene Verteilgut an die Übergabekammer zu übergeben und zu Beginn der "normalen" Verteilarbeit auszubringen. Die Verlagerungsrichtung des Schiebers erstreckt sich dabei zweckmäßigerweise etwa senkrecht zu der das Dosierorgan mit der Übergabekammer verbindenden Leitung. Letztere kann vorzugsweise mit geeigneten Dichtlippen versehen sein, welche in der geschlossenen Position der Klappe bzw. des Schiebers gegen die Klappe bzw. gegen den Schieber anliegen, so dass Wiegefehler auch dann vermieden werden, wenn die Übergabekammer unterhalb der Klappe bzw. des Schiebers von dem Gebläse mit dem Förderluftstrom beaufschlagt ist, während die Abdrehprobe durchgeführt wird.

Gemäß einer zweiten vorteilhaften Ausführungsform, welche gleichfalls ohne einen separaten Wiegebehälter auskommt und bei welcher das anlässlich einer Abdrehprobe dosierte Verteilgut direkt in der Übergabekammer bei von dieser entkoppelten und/oder deaktiviertem Gebläse gesammelt wird, um seine Masse gravimetrisch zu erfassen, wonach die Übergabekammer mit dem Gebläse gekoppelt und/oder letzteres aktiviert wird, um das Verteilgut auszubringen, kann eine Ausführungsvariante vorsehen, dass die Wiegeeinrichtung eine im Innern der Übergabekammer, insbesondere an deren Boden, angeordnete Wiegezelle umfasst, wobei die Wiegezelle insbesondere mittels eines innenseitigen Schiebers freilegbar und abdeckbar ist. Die Wiegezelle ist folglich derart im Innern der Übergabekammer positioniert, dass das mittels des Dosierorgans dosierte Verteilgut unmittelbar auf sie fällt, ohne dass es zu nicht gravimetrisch erfassten Verlusten kommen kann. Um die Wiegezelle während der Verteilarbeit zu schützen, kann sie vorzugsweise mittels des Schiebers abgedeckt und lediglich zum Zwecke der Durchführung einer Abdrehprobe freigelegt werden.

Gemäß einer weiteren Ausführungsvariante kann in diesem Zusammenhang vorgesehen sein, dass zumindest ein unterer Abschnitt der Übergabekammer
- mittels wenigstens einer Wiegezelle; oder
- mittels wenigstens eines, mit einem Drehmoment- oder Torsionssensor versehenen Schwenklagers
mit der das Dosierorgan mit der Übergabekammer verbindenden Leitung in Verbindung steht. Die gesamte Übergabekammer oder auch nur ein - unterer - Teil derselben kann folglich entweder mittels der Wiegezellen oder mittels des mit dem Sensor versehenen Schwenklagers mit der das Dosierorgan mit der Übergabekammer verbindenden Leitung verbunden sein, so dass das anlässlich einer Abdrehprobe dosierte Verteilgut wiederum in der Übergabekammer selbst aufgefangen wird, um seine Masse gravimetrisch zu erfassen.

Um sicherzustellen, dass das Gebläse während der Durchführung von Abdrehproben in der vorgenannten Weise keinen Luftstrom in die Übergabekammer einleitet, kann die Steuer- und/oder Regeleinrichtung zweckmäßigerweise das Gebläse deaktivieren oder, z.B. mittels einer Absperrklappe oder dergleichen, von der Übergabekammer trennen, wobei alternativ oder zusätzlich beispielsweise auch eine Warnmeldung generiert werden kann, wenn die Wiegeeinrichtung z.B. im Störungsfall anlässlich einer Abdrehprobe bei aktiviertem Gebläse die Masse an hierbei dosiertem Verteilgut erfasst.

Um auf die mittels einer Mehrzahl an Abdrehproben ermittelten funktionalen Beziehungen zwischen dem Betriebsparameter des Dosierorgans und dem hiermit dosierten Ist-Massenstrom bestimmter Verteilgüter zu einem späteren Zeitpunkt zugreifen zu können und die funktionale Beziehung während der Verteilarbeit vorzugsweise stets aktuell zu halten, um auf diese Weise insbesondere physikalische Veränderungen des Verteilgutes, wie sie beispielsweise infolge Feuchtigkeitseintritt auftreten können, zu berücksichtigen, kann in vorteilhafter Ausgestaltung des erfindungsgemäßen Verfahrens vorgesehen sein, dass die aus der anlässlich einer Abdrehprobe gravimetrisch erfassten Masse an einem bestimmten Verteilguttyp bezogen auf den Probenahmezeitraum und den Betriebsparameter des Dosierorgans erhaltene funktionale Beziehung zwischen dem Betriebsparameter des Dosierorgans und dem Ist-Massenstrom an Verteilgutgut, insbesondere in Form eines Dosierfaktors, gespeichert wird, um diese funktionale Beziehung bedarfsweise abrufen zu können, wobei sie insbesondere anlässlich der Durchführung einer weiteren Abdrehprobe aktualisiert wird.

Bei einer dementsprechend ausgestalteten Verteilmaschine kann demnach in vorteilhafter Ausgestaltung vorgesehen sein, dass die Steuer- und/oder Regeleinrichtung zur Speicherung der, aus der anlässlich einer Abdrehprobe gravimetrisch erfassten Masse an einem bestimmten Verteilguttyp bezogen auf den Probenahmezeitraum und den Betriebsparameter des Dosierorgans erhaltenen, funktionalen Beziehung zwischen dem Betriebsparameter des Dosierorgans und dem Ist-Massenstrom an Verteilgut, insbesondere in Form eines Dosierfaktors, ausgebildet ist oder mit einer hierzu geeigneten Speichereinrichtung in Verbindung steht, um diese funktionale Beziehung bedarfsweise abrufen zu können, wobei die Steuer- und/oder Regeleinrichtung insbesondere zur Aktualisierung dieser funktionalen Beziehung anlässlich der Durchführung einer weiteren Abdrehprobe ausgebildet ist.

In Bezug auf die eingangs erwähnte Überbrückung der Totzeiten beim Inbetriebsetzen gattungsgemäßer Verteilmaschinen - sei es zu Beginn der Verteilarbeit oder sei es z.B. nach der Fahrt durch das Vorgewende -, kann es sich insbesondere als zweckmäßig erweisen, wenn die während der Abdrehprobe dosierte Masse an Verteilgut an die Förderleitung übergeben und ausgebracht wird, während oder unmittelbar bevor das Dosierorgan nach Beendigung der Abdrehprobe in seinen Normalbetriebszustand versetzt wird, in welchem es gemäß dem gewünschten Soll-Massenstrom gesteuert und/oder geregelt wird. Die während der Abdrehprobe dosierte Masse an Verteilgut kann auf diese Weise folglich zu einem Zeitpunkt ausgebracht werden, bevor das bei (Wieder)aufnahme der Verteilarbeit von dem Dosierorgan neuerlich dosierte Verteilgut in die Übergabekammer und von dort über die Förder- bzw. Verteilerleitung(en) zu den Verteilorganen gelangen kann, so dass ein spontaner Betriebsstart sichergestellt und lokale Unterversorgungen des zu bestellenden Bodens mit dem Verteilgut vermieden werden.

Bei einer hierfür eingerichteten Verteilmaschine kann folglich vorzugsweise vorgesehen sein, dass die Steuer- und/oder Regeleinrichtung zum Versetzen des Dosierorgans in seinen Normalbetriebszustand, in welchem sie das Dosierorgan gemäß dem gewünschten Soll-Massenstrom steuert und/oder regelt, ausgebildet ist, während oder unmittelbar nachdem die anlässlich der Abdrehprobe dosierte Masse an Verteilgut nach Beendigung der Abdrehprobe an die Förderleitung übergeben und ausgebracht wird. Letzteres kann z.B. in einfacher Weise dadurch geschehen, dass die während der Abdrehprobe dosierte Verteilgutmenge, welche sich entweder bereits in der Übergabekammer befindet oder z.B. von einem Wiegebehälter dorthin überführt worden ist, durch Einschalten des Gebläses oder Öffnen einer Absperrklappe in einer Blasluftleitung, welche das Gebläse mit der Übergabekammer verbindet, fluidisiert und in die Förderleitung eingetragen wird, um das Verteilgut über die die Verteilerleitungen den jeweiligen Verteilorganen zu zuführen.

Darüber hinaus kann es selbstverständlich von Vorteil sein, wenn bei der Steuerung und/oder Regelung des Dosierorgans in Abhängigkeit der funktionalen Beziehung zwischen dem Betriebsparameter des Dosierorgans und der hiermit anlässlich der vorausgegangenen Abdrehprobe dosierten Masse an Verteilgut auf den gewünschten Soll-Massenstrom an Verteilgut ferner wenigstens ein Verteilparameter aus der Gruppe
- Arbeitsbreite,
- Fahrgeschwindigkeit und
- Ist-Position der Verteilmaschine
berücksichtigt wird. Die Ist-Position der Verteilmaschine kann dabei in als solcher bekannter Weise mittels eines mit der Steuer- und/oder Regeleinrichtung in Verbindung stehenden GPS-Empfängers ermittelt werden, so dass es insbesondere im Falle eines Ausbringens von Dünger möglich ist, verschiedenen Soll-Massenströmen an Verteilgut gemäß einer elektronischen Applikationskarte Rechnung zu tragen. Die Fahrgeschwindigkeit kann gleichfalls beispielsweise mittels GPS oder mittels hierfür üblicher Sensoren ermittelt oder auch der Steuer- und/oder Regeleineinheit eingegeben werden. Letztes gilt freilich auch für die gewünschte Arbeitsbreite einschließlich Teilbreitenschaltungen.

Bei einer zur Durchführung eines solchen Verfahrens eingerichteten Verteilmaschine kann demnach vorzugsweise vorgesehen sein, dass die Steuer- und/oder Regeleinrichtung bei der Steuerung und/oder Regelung des Dosierorgans in Abhängigkeit der funktionalen Beziehung zwischen dem Betriebsparameter des Dosierorgans und der hiermit anlässlich der vorausgegangenen Abdrehprobe dosierten Masse an Verteilgut auf den gewünschten Soll-Massenstrom an Verteilgut ferner wenigstens einen Verteilparameter aus der Gruppe
- Arbeitsbreite,
- Fahrgeschwindigkeit und
- Ist-Position der Verteilmaschine
berücksichtigt. Sie kann zu diesem Zweck insbesondere mit einem mit der Steuer- und/oder Regeleinrichtung wirkverbundenen GPS-Empfänger und/oder mit entsprechenden Sensoren der vorgenannten Art ausgestattet sein.

Schließlich kann es insbesondere im Hinblick auf die erstmalige Durchführung einer Abdrehprobe, nachdem der Vorratsbehälter der Verteilmaschine mit frischem Verteilgut befüllt worden ist und die Verteilarbeit beginnen soll, zweckmäßig sein, dass für die Abdrehprobe ein vorherbestimmter Probenahmezeitraum berücksichtigt wird, zu dessen Beginn das Dosierorgan bereits betätigt worden ist, wobei zur Erfassung der während der Abdrehprobe dosierten Masse an Verteilgut die Differenz der Masse am Ende des Probenahmezeitraums und zu Beginn des Probenahmezeitraums ermittelt wird. Auf diese Weise wird sichergestellt, dass die Zellen oder Nockentäler eines Dosierrades des Dosierorgans in dem vorherbestimmten Probenahmezeitraum gänzlich mit dem relevanten Verteilgut befüllt sind und nicht etwa anfänglich noch (teilweise) leere oder (teilweise) mit "altem" Verteilgut mit unterschiedlicher Dichte befüllte Zellen oder Nockentäler des Dosierrades die Abdrehprobe verfälschen. Das Dosierrad kann dabei beispielsweise so lange mit dem für die Abdrehprobe vorherbestimmten Betriebsparameter, wie z.B. zumindest eine halbe Umdrehung, gedreht werden, so dass es gänzlich mit dem "aktuellen" Verteilgut befüllt ist, wonach die eigentliche Abdrehprobe erst beginnt. Das hierbei gegebenenfalls dosierte Restverteilgut bleibt für die Abdrehprobe aber aufgrund dessen, dass zur Erfassung der während der Abdrehprobe dosierten Masse an Verteilgut nur die Differenz der Masse am Ende des Probenahmezeitraums und zu Beginn des Probenahmezeitraums ermittelt wird, unberücksichtigt. Dies kann in als solcher bekannter Weise mittels bekannter, sogenannter "Tara-Funktionen" der eingesetzten Wiegezellen oder auch durch elektronische Errechnung der Differenz zwischen dem Messwert der Masse an Verteilgut zum Ende des Probenahmezeitraums und zu Beginn des Probenahmezeitraums geschehen.

Weitere Merkmale und Vorteile der Erfindung ergeben sich aus der nachfolgenden Beschreibung von Ausführungsbeispielen unter Bezugnahme auf die Zeichnungen. Dabei zeigen:

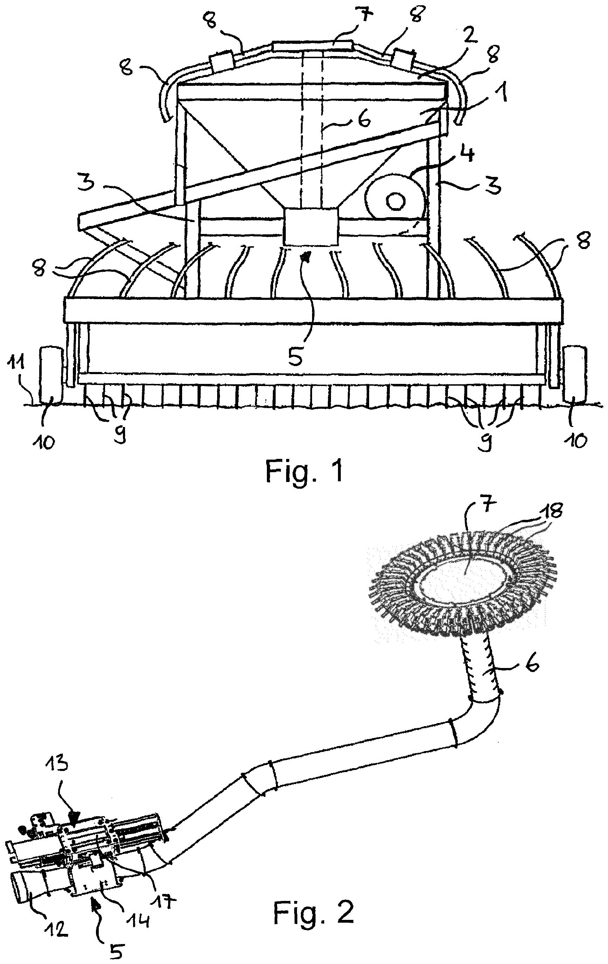

- Fig. 1: eine schematische Ansicht einer Ausführungsform einer nach Art einer Drillmaschine ausgestalteten pneumatischen Verteilmaschine von deren Heck aus betrachtet;
- Fig. 2: eine schematische perspektivische Ansicht der in Form eines Verteilerkopfes ausgestalteten Verteileinheit der Verteilmaschine gemäß Fig. 1 einschließlich des Dosierorgans, des Gehäuses der Übergabekammer und der pneumatischen Förderkomponenten;

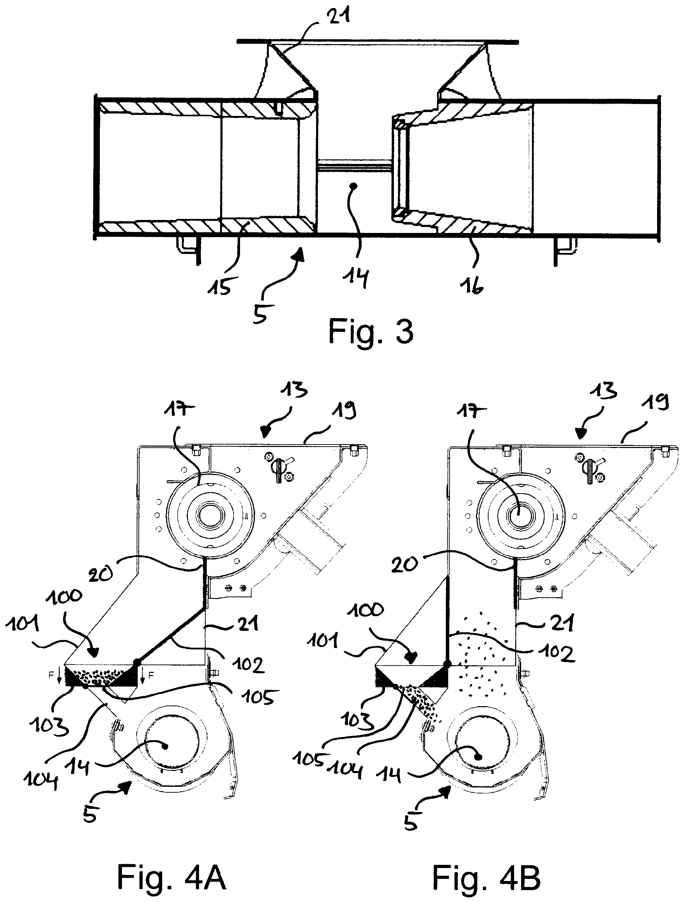

- Fig. 3: eine schematische, teilweise geschnitten dargestellte Detailansicht einer Ausführungsform einer Übergabekammer der Verteilmaschinegemäß Fig. 1 und 2, welche zwischen der Düse und dem Diffusor eines Injektors gebildet ist, aber ohne das Dosierorgan;
- Fig. 4A und 4B: je eine schematische Schnittansicht des Dosierorgans und der Übergabekammer der Verteilmaschine gemäß Fig. 1 bis 3 mit einer ersten Ausführungsform einer zur automatisierten Durchführung von Abdrehproben dienenden, stromab des Dosierorgans und stromauf der Übergabekammer angeordneten Wiegeeinrichtung, welche einen Wiegebehälter mit in dessen Innern angeordneten Wiegezellen umfasst, in verschiedenen Betriebssituationen;

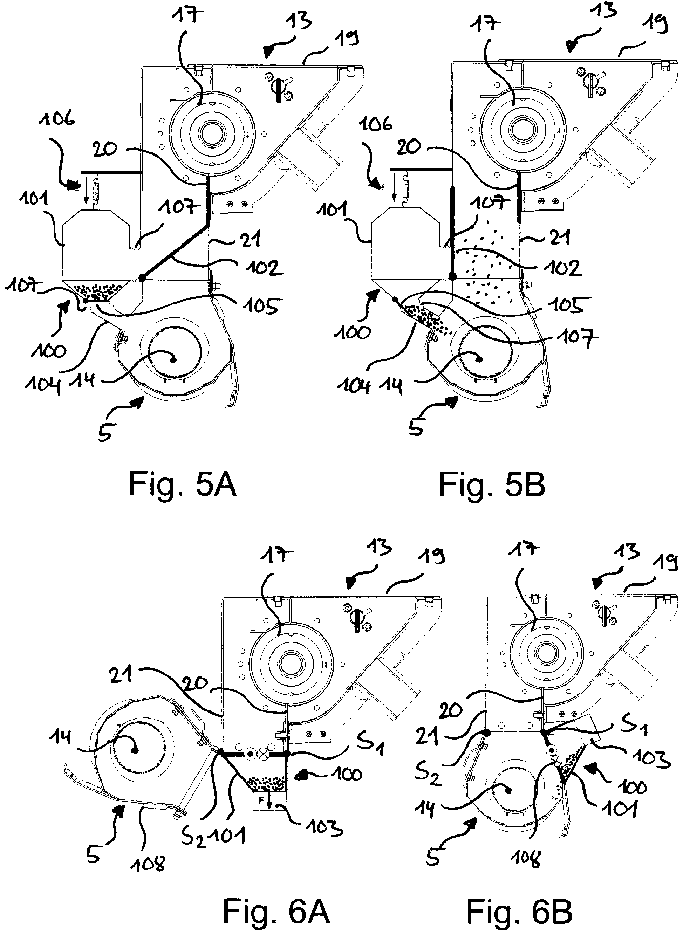

- Fig. 5A und 5B: je eine im Wesentlichen den Fig. 4A und 4B entsprechende schematische Ansicht mit einer demgegenüber abgewandelten, zweiten Ausführungsform einer zur automatisierten Durchführung von Abdrehproben dienenden, stromab des Dosierorgans und stromauf der Übergabekammer angeordneten Wiegeeinrichtung, welche einen mit einer äußeren Behälterwaage in Verbindung stehenden Wiegebehälter umfasst, in verschiedenen Betriebssituationen;
- Fig. 6A und 6B: je eine schematische Schnittansicht des Dosierorgans und der schwenkbar gelagerten Übergabekammer der Verteilmaschine mit einer dritten Ausführungsform einer zur automatisierten Durchführung von Abdrehproben dienenden, stromab des Dosierorgans und stromauf der Übergabekammer angeordneten Wiegeeinrichtung, welche einen gleichfalls schwenkbar gelagerten Wiegebehälter mit in dessen Innern angeordneten Wiegezellen umfasst, in verschiedenen Betriebssituationen;

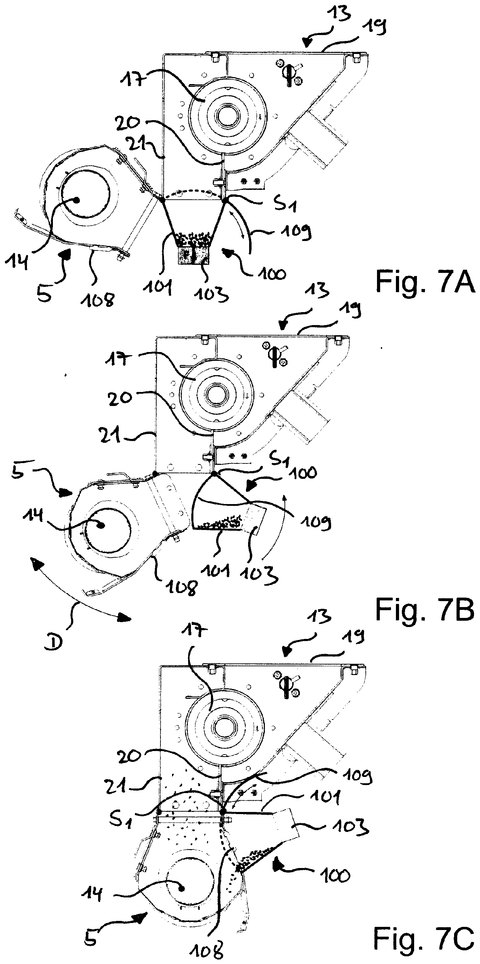

- Fig. 7A bis 7C: je eine schematische Schnittansicht des Dosierorgans und der an einem Drehschieber angeordneten Übergabekammer der Verteilmaschine mit einer vierten Ausführungsform einer zur automatisierten Durchführung von Abdrehproben dienenden, stromab des Dosierorgans und stromauf der Übergabekammer angeordneten Wiegeeinrichtung, welche einen schwenkbar gelagerten Wiegebehälter mit in dessen Innern angeordneten Wiegezellen umfasst, in verschiedenen Betriebssituationen;

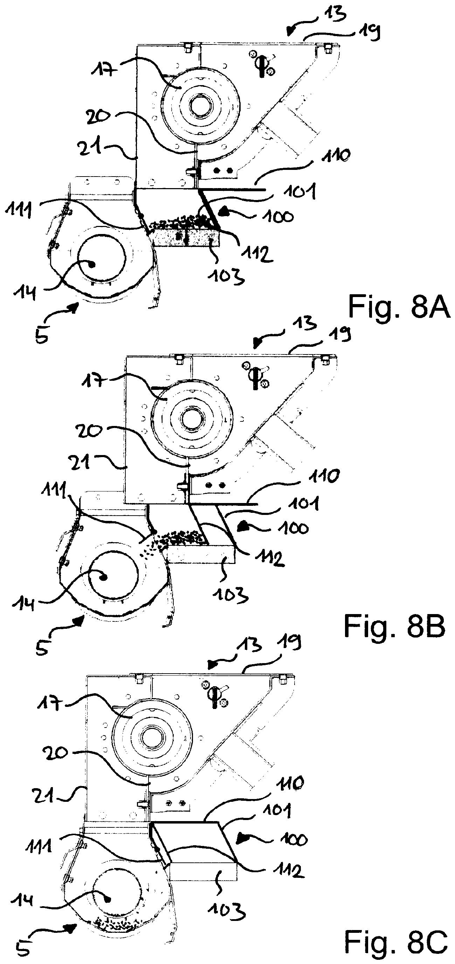

- Fig. 8A bis 8C: je eine schematische Schnittansicht des Dosierorgans und der an einem Linearschieber angeordneten Übergabekammer der Verteilmaschine mit einer fünften Ausführungsform einer zur automatisierten Durchführung von Abdrehproben dienenden, stromab des Dosierorgans und stromauf der Übergabekammer angeordneten Wiegeeinrichtung, welche einen an demselben Linearschieber angeordneten Wiegebehälter mit in dessen Innern angeordneten Wiegezellen umfasst, in verschiedenen Betriebssituationen;

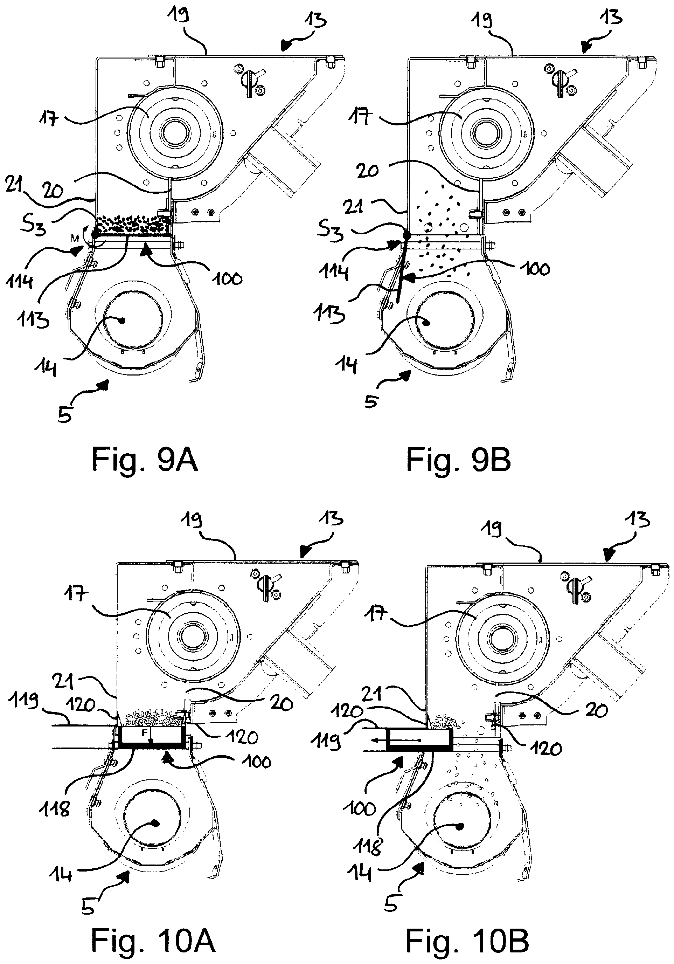

- Fig. 9A und 9B: je eine schematische Schnittansicht des Dosierorgans und der Übergabekammer der Verteilmaschine mit einer sechsten Ausführungsform einer zur automatisierten Durchführung von Abdrehproben dienenden, stromab des Dosierorgans und stromauf der Übergabekammer angeordneten Wiegeeinrichtung, welche eine in der das Dosierorgan mit der Übergabekammer verbindenden Leitung angeordnete Klappe mit auf deren Oberseite angeordneten Wiegezellen oder mit an deren Schwenkachse angeordneten Drehmoment- bzw. Torsionssensoren umfasst, in verschiedenen Betriebssituationen;
- Fig. 10A und B: je eine schematische Schnittansicht des Dosierorgans und der Übergabekammer der Verteilmaschine mit einer siebten Ausführungsform einer zur automatisierten Durchführung von Abdrehproben dienenden, stromab des Dosierorgans und stromauf der Übergabekammer angeordneten Wiegeeinrichtung, welche einen in der das Dosierorgan mit der Übergabekammer verbindenden Leitung angeordneten Schieber mit auf dessen Oberseite angeordneten Wiegezellen umfasst, in verschiedenen Betriebssituationen;

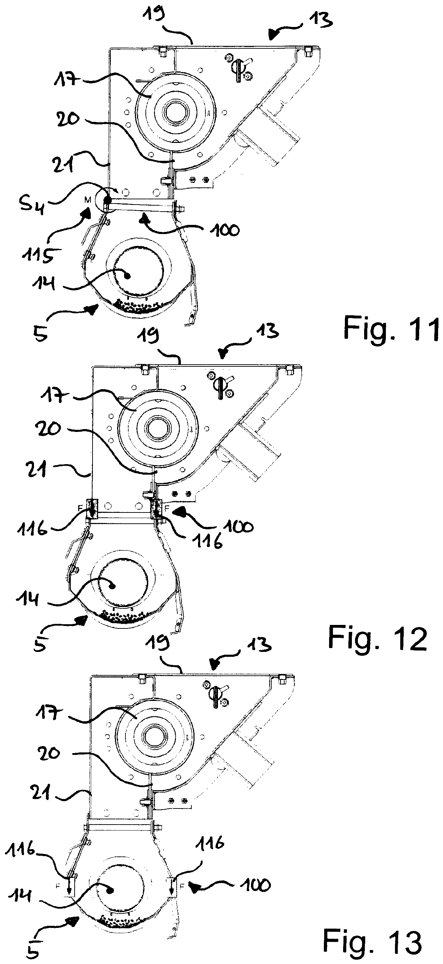

- Fig. 11: eine schematische Schnittansicht des Dosierorgans und der Übergabekammer der Verteilmaschine mit einer achten Ausführungsform einer zur automatisierten Durchführung von Abdrehproben dienenden, stromab des Dosierorgans und an der Übergabekammer angeordneten Wiegeeinrichtung, welche ein mit einem Drehmoment- bzw. Torsionssensor ausgestattetes Schwenklager der Übergabekammer umfasst;
- Fig. 12: eine schematische Schnittansicht des Dosierorgans und der Übergabekammer der Verteilmaschine mit einer neunten Ausführungsform einer zur automatisierten Durchführung von Abdrehproben dienenden, stromab des Dosierorgans und an der Übergabekammer angeordneten Wiegeeinrichtung, welche eine mit Wiegezellen ausgestattete Verbindung der Übergabekammer mit der das Dosierorgan mit der Übergabekammer verbindenden Leitung umfasst;
- Fig. 13: eine im Wesentlichen der Fig. 12 entsprechende schematische Ansicht mit einer demgegenüber abgewandelten, zehnten Ausführungsform einer zur automatisierten Durchführung von Abdrehproben dienenden, stromab des Dosierorgans und an der Übergabekammer angeordneten Wiegeeinrichtung, bei welcher nur der untere Abschnitt der Übergabekammer mittels Wiegezellen mit einem oberen Abschnitt derselben verbunden ist; und

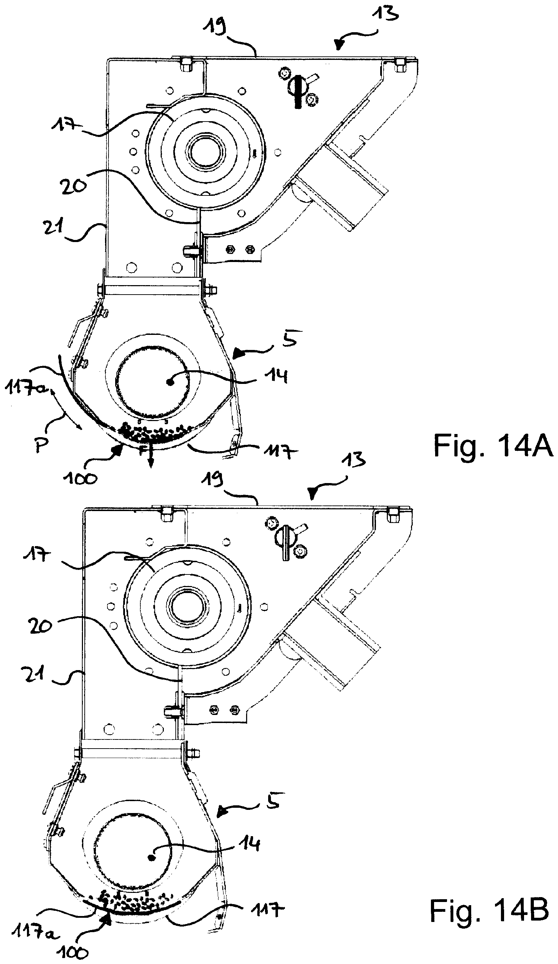

- Fig. 14A und B: je eine schematische Schnittansicht des Dosierorgans und der Übergabekammer der Verteilmaschine mit einer elften Ausführungsform einer zur automatisierten Durchführung von Abdrehproben dienenden, stromab des Dosierorgans und in der Übergabekammer angeordneten Wiegeeinrichtung mit am Boden der Übergabekammer angeordneten Wiegezellen in verschiedenen Betriebssituationen.

In der Fig. 1 ist ein Ausführungsbeispiel einer pneumatischen Verteilmaschine schematisch wiedergegeben, welche im vorliegenden Fall nach Art einer Sä- oder Drillmaschine ausgestaltet ist und beispielsweise an einem üblichen Dreipunkgestänge einer Zugmaschine, wie eines Traktors, lösbar festgelegt werden kann. Sie umfasst einen Vorratsbehälter 1 zur Aufnahme von Verteilgut, wie z.B. Saatgut und/oder Dünger, mit einer Abdeckung 2, welche an Stützen 3 eines Rahmens getragen sind. An letzterem ist ferner ein Gebläse 4 zur Erzeugung eines Luftstroms festgelegt. Unterhalb eines Auslaufes des etwa trichterförmig nach unten zulaufenden Behälters 1 befindet sich ein in der Fig. 2 sowie insbesondere in der Fig. 3 näher erkennbares Gehäuse 5 einer Übergabekammer 14, welche zur Überführung des Verteilgutes an eine Förderleitung 6 dient. Letztere ist von dem Gebläse 4 mit einem Luftstrom beaufschlagt, um das Verteilgut nach oben in eine Verteileinheit 7 zu fördern. Die Verteileinheit 7 ist im vorliegenden Fall von einem Verteilerkopf gebildet und umfasst eine Mehrzahl an um dessen Umfang verteilt angeordneten, sich im vorliegenden Fall etwa radial nach außen erstreckenden Anschlüssen, an welche je eine Verteilerleitung 8 angeschlossen ist. Der Anschluss der Verteilerleitungen 8 kann beispielsweise mittels je eines Gehäuses 18 (vgl. die Fig. 2) geschehen, welches zweckmäßigerweise mit je einem Absperrorgan zum bedarfsweisen Unterbrechen des fluidisierten Verteilgutstromes ausgestattet ist, um verschiedene Arbeitsbreiten oder auch Teilbreitenschaltungen vorsehen zu können. Die von dem Verteilerkopf der Verteileinheit 7 abgehenden Verteilerleitungen 8, welche z.B. nach Art von Schläuchen ausgebildet sein können und in der Fig. 1 aus Übersichtlichkeitsgründen abgebrochen dargestellt sind, sind im Wesentlichen nach unten und hinten geführt, wobei sie an ihren freien, der Verteileinheit 7 abgewandten Enden mit Verteilorganen versehen sind. Im Falle der in Fig. 1 exemplarisch gezeigten Sämaschine handelt es sich bei diesen Verteilorganen um nicht im Einzelnen erkennbare Säscharen mit stromab derselben angeordneten Zustreichern 9, sogenannten Striegeln. Der Rahmen der Verteilmaschine kann im Übrigen über Stützräder 10 auf dem Boden 11 abgestützt und insbesondere von diesen angehoben werden.

Die Fig. 2 zeigt die pneumatischen Förderkomponenten der Verteilmaschine gemäß Fig. 1, welche zur Überführung des Verteilgutes von der im Innern des Gehäuses 5 befindlichen Übergabekammer 14 in die nach Art eines Verteilerkopfes ausgestaltete Verteileinheit 7 mittels der Förderleitung 6 dienen. Letztere weist an ihrem der Verteileinheit 7 abgewandten Ende einen Anschlussstutzen 12 zur fluidischen Kontaktierung des Gebläses 4 (siehe Fig. 1) auf, wobei stromab des Anschlussstutzens 12 der Auslass des Dosiergehäuses 13 eines weiter unten näher beschriebenen Dosierorgans in die Übergabekammer 14, welche von der Förderleitung 6 durchquert ist, einmündet. Von dort gelangt das in den Luftstrom eindispergierte Verteilgut zunächst über einen etwa horizontalen Abschnitt der Förderleitung 6 in einen Steigrohrabschnitt derselben, welche von unten in das Zentrum des Verteilerkopfes der Verteileinheit 7 einmündet, um dessen Umfang herum die radialen Anschlüsse für die Gehäuse 18 angeordnet sind, an welche sich wiederum je eine, in der Fig. 2 nicht nochmals zeichnerisch dargestellte Verteilerleitung 8 anschließt.

Wie weiterhin der Fig. 2 und insbesondere der Fig. 3 zu entnehmen ist, ist im Innern des Gehäuses 5 der unterhalb des Dosiergehäuses 13 angeordneten Übergabekammer 14, welche im vorliegenden Fall z.B. quer zur Fahrtrichtung von der Förderleitung 6 durchsetzt ist, einerseits eine Düse 15, andererseits ein nach Art einer Expansionsdüse ausgestalteter Diffusor 16 eines Injektors untergebracht, welche koaxial und z.B. senkrecht zur Fahrtrichtung der Verteilmaschine am tiefsten Punkt derselben angeordnet sind. Die Übergabekammer 14 befindet sich dabei in dem Zwischenraum zwischen der Düse 15 und dem Diffusor 16 des Injektors. Während die Düse 15 des Injektors an dem in Fig. 2 linken Ende des Gehäuses 5 der Übergabekammer 14 an das Gebläse 4 (siehe Fig. 1) angeschlossen ist, schließt sich an den Diffusor 16 des Injektors an dem in Fig. 2 rechten Ende des Gehäuses 5 der Übergabekammer 14 die Förderleitung 6 an. Auf diese Weise wird das Verteilgut, nachdem es mittels des in dem Dosiergehäuse 13 aufgenommenen Dosierorgans in einem gewünschten Massenstrom dosiert worden ist, in der zwischen der Düse 15 und dem Diffusor 16 des Injektors angeordneten Übergabekammer 14 mittels des über die Düse 15 einströmenden Gasstroms in den Diffusor 16 überführt und gelangt von dort in die Förderleitung 6.

Die in den Fig. 1 bis 3 wiedergegebene Verteilmaschine ist darüber hinaus mit einer nicht zeichnerisch dargestellten Steuer- und/oder Regeleinrichtung ausgestattet, welche die funktionellen Komponenten der Verteilmaschine steuert und/oder regelt und unter anderem mit einer weiter unten unter Bezugnahme auf die Fig. 4 bis 14 im Einzelnen erläuterten Wiegeeinrichtung 100 in Wirkverbindung steht, welcher ein jeweiliger in dem Vorratsbehälter 1 bevorrateter Verteilguttyp, der ausgebracht werden soll, durch Betätigung des Dosierorgans 17 über einen vorherbestimmten Probenahmezeitraum mit einem vorherbestimmten Betriebsparameter während einer Abdrehprobe zuführbar ist, um die derart dosierte Masse an Verteilgut gravimetrisch zu erfassen. Die Steuer- und/oder Regeleinrichtung steht darüber hinaus mit dem Dosierorgan 17 in Wirkverbindung, um aus der mittels der Wiegeeinrichtung 100 erfassten Masse an Verteilgut bezogen auf den Probenahmezeitraum und den Betriebsparameter des Dosierorgans 17 während der Abdrehprobe eine funktionalen Beziehung zwischen dem Betriebsparameter des Dosierorgans 17 und dem hiermit dosierten Ist-Massenstrom an Verteilgut zu errechnen und das Dosierorgan 17 anschließend in Abhängigkeit dieser funktionalen Beziehung, z.B. in Form eines Dosierfaktors, auf einen Soll-Massenstrom an Verteilgut zu steuern und/oder zu regeln.

Die Steuer- und/oder Regeleinrichtung kann dabei zweckmäßigerweise zur Speicherung der anlässlich der Abdrehproben erhaltenen funktionalen Beziehung zwischen dem Betriebsparameter des Dosierorgans 17 und dem Ist-Massenstrom an Verteilgut ausgebildet sein oder mit einer hierzu geeigneten Speichereinrichtung (ebenfalls nicht gezeigt) in Verbindung stehen, um diese funktionale Beziehung bedarfsweise abrufen zu können. Ferner kann diese funktionale Beziehung insbesondere auch anlässlich der Durchführung einer bzw. mehrerer weiterer Abdrehprobe(n) aktualisiert werden, so dass physikalische Veränderungen des Verteilgutes bei fortwährender Verteilarbeit, wie sie insbesondere infolge Feuchtigkeitszutritts auftreten können, nicht zu Dosierfehlern führen. Darüber hinaus kann vorgesehen sein, dass die Steuer- und/oder Regeleinrichtung bei der Steuerung und/oder Regelung des Dosierorgans 17 in Abhängigkeit der funktionalen Beziehung zwischen dem Betriebsparameter des Dosierorgans 17 und der hiermit anlässlich der vorausgegangenen Abdrehprobe dosierten Masse an Verteilgut auf den gewünschten Soll-Massenstrom an Verteilgut ferner weitere Verteilparameter berücksichtigt, wie insbesondere die - z.B. mittels einer der Steuer- und/oder Regeleinrichtung zugeordneten Eingabeeinrichtung, wie in Form eines Bedienterminals (nicht gezeigt), eingegebene - Arbeitsbreite einschließlich gegebenenfalls vorgesehener Teilbreitenschaltungen, die - gleichfalls z.B. eingegebene oder sensorisch oder mittels GPS erfasste - Fahrgeschwindigkeit und/oder die - ebenfalls insbesondere mittels GPS erfasste - Ist-Position der Verteilmaschine.

Das Dosierorgan 17 kann im Übrigen in beliebiger bekannter Weise ausgestaltet sein, wobei es im vorliegenden Fall jeweils ein gesteuert und/oder geregelt in Rotation versetzbares Dosierrad aufweist, welches je nach Art des auszubringenden Verteilgutes beispielsweise nach Art von Zellen- oder Nockenrädern ausgebildet sein kann. Bei dem während der Abdrehproben herangezogenen Betriebsparameter des Dosierorgans 17, welcher zur Ermittlung der für seine Steuerung und/oder Regelung auf den gewünschten Soll-Massenstrom an Streugut maßgeblichen funktionalen Beziehung, wie eines Dosierfaktors, dient, kann es sich folglich beispielsweise um die Drehzahl, die Drehfrequenz, die Anzahl an Umdrehungen, die Anzahl an ausgeschütteten Zellen bzw. Nockentälern des Dosierrades des Dosierorgane 17 oder dergleichen handeln. Gleichfalls ist es z.B. denkbar, dass die Anzahl an während einer Abdrehprobe ausgeschütteten Zellen oder Nockentäler des Dosierrades des Dosierorgans 17 mit Hilfe eines geeigneten Sensors gezählt werden.

Wie aus der nachfolgenden Beschreibung verschiedener Ausführungsformen von Wiegeeinrichtungen 100, welche zur gravimetrischen Erfassung des während automatisierter Abdrehproben dosierten Verteilgutes dienen, unter Bezugnahme auf die Fig. 4 bis 14 ferner ersichtlich, weist das Dosiergehäuse 13 des Dosierorgans 17 beispielsweise einen einem Auslass des Vorratsbehälters 1 (siehe Fig. 1) zugewandten, oberen Einlass 19 sowie einen unteren Auslass 20 auf, an welchen sich eine Leitung 21 anschließt, welche den Auslass 20 des Dosiergehäuses 13 des Dosierorgans 17 mit dem Gehäuse 5 der Übergabekammer 14 verbindet.

Die in den Fig. 4 bis 8 wiedergegebenen Ausführungsbeispiele einer zur automatisierten Durchführung von Abdrehproben dienenden Wiegeeinrichtung 100 haben gemeinsam, dass letztere je einen einerseits unmittelbar stromab des Dosierorgans 17, andererseits unmittelbar stromauf der Übergabekammer 14 angeordneten Wiegebehälter 101 umfasst, welchem das Verteilgut anlässlich einer Abdrehprobe wahlweise zugeführt werden kann oder an welchem das Verteilgut anlässlich der "normalen" Verteilarbeit vorbei geführt werden kann, so dass das mittels des Dosierorgans 17 dosierte Verteilgut von dem Auslass 20 des Dosiergehäuses 13 über die Leitung 21 direkt in die Übergabekammer 14 gelangt. Der Wiegebehälter 101, welcher beispielsweise ein Fassungsvermögen von etwa 0,5 1 bis etwa 5 1 aufweisen und gegebenenfalls zusätzlich mit Füllstandsensoren (nicht gezeigt) ausgestattet sein kann, ist dabei auf einem solchen Höhenniveau angeordnet, dass das Verteilgut einerseits anlässlich einer Abdrehprobe rein aufgrund Gravitation vom Auslass 20 des Dosiergehäuses 13 in den Wiegebehälter 101 hinein fallen kann, während das in dem Wiegebehälter 101 bei einer Abdrehprobe gesammelte Verteilgut andererseits nach Beendigung der Abdrehprobe, wiederum rein aufgrund Gravitation, der Übergabekammer 14 zugeleitet werden kann, so dass die während der Abdrehprobe dosierte Masse an Verteilgut an die Förderleitung 6 übergeben und über die Verteileinheit 7 und die Verteilerleitungen 8 (siehe Fig. 1) ausgebracht werden kann, um hierdurch insbesondere Totzeiten bei der (Wieder)aufnahme der Verteilarbeit zu überbrücken und hierdurch bedingte lokale Unterversorgungen des Bodens zu vermeiden.

In Falle der Ausführungsform gemäß Fig. 4A und 4B ist der Wiegebehälter 101 der Wiegeeinrichtung 100 in Radialrichtung seitlich neben der das Dosiergehäuse 13 des Dosierorgans 17 mit dem Gehäuse 5 der Übergabekammer 14 verbindenden Leitung 21 angeordnet, wobei in der Leitung 21 eine nach Art einer hieran schwenkbar angelenkten Leitklappe ausgebildete Weiche 102 vorgesehen ist, welche sich in der Fig. 4 in einer Position befindet, in welcher sie das gesamte dosierte Verteilgut dem Wiegebehälter 101 zuführt (die Abdrehprobe wird durchgeführt), während sie sich in der Fig. 4B in einer Position befindet, in welcher sie das gesamte dosierte Verteilgut der Übergabekammer 14 zuführt, so dass der Wiegebehälter 101 folglich gebypasst wird (es findet die Verteilarbeit statt). Am Boden des Wiegebehälters 101 befinden sich eine oder mehrere Wiegezellen 103, um die Masse des anlässlich einer Abdrehprobe dosierten Verteilgutes gravimetrisch zu erfassen und an die Steuer- und/oder Regeleinrichtung der Verteilmaschine zu übermitteln. In seinem bodenseitigen Bereich steht der Wiegebehälter 101 darüber hinaus über eine Übergabeleitung 104 mit dem Gehäuse 5 der Übergabekammer 14 in Verbindung, wobei die Übergabeleitung 104 mittels einer Absperrorgans, wie z.B. einer Absperrklappe 105, verschlossen (siehe Fig. 4A; die Abdrehprobe kann durchgeführt werden) und geöffnet werden kann (siehe Fig. 4B; das Verteilgut gelangt nach der Abdrehprobe in die Übergabekammer 14, um es an die Förderleitung 6 zu übergeben und auszubringen).

Die in den Fig. 5A und 5B dargestellte Ausführungsform einer Wiegeeinrichtung 100, bei der identische und wirkungsgleiche Komponenten mit denselben Bezugszeichen versehen sind, unterscheidet sich von jener gemäß Fig. 4A und 4B vornehmlich dadurch, dass anstelle der im Innern des Wiegebehälters 101 angeordneten Wiegezellen 103 (siehe Fig. 4A und 4B) eine äußere Behälterwaage 106 vorgesehen ist, an welcher der Wiegebehälter 101 aufgehängt ist. Um letzteren einerseits von der das Dosiergehäuse 13 des Dosierorgans 17 mit dem Gehäuse 5 der Übergabekammer 14 verbindenden Leitung 21, andererseits von der direkt in das Gehäuse 5 der Übergabekammer 14 mündenden Übergabeleitung 104 mechanisch zu entkoppeln, sind zwischen den genannten Leitungen 21, 104 und dem Wiegebehälter 101 Kompensationselemente 107, wie z.B. Bälge oder Schlauchabschnitte aus nachgiebig elastischen oder biegeschlaffen Materialien, wie Silikon, Gummi, Textil- oder Filtergewebe und dergleichen, zwischengeordnet.

Im Falle der Ausführungsform gemäß Fig. 6A und 6B ist der Wiegebehälter 101 der Wiegeeinrichtung 100 wiederum - ähnlich den Fig. 4A und 4B - an seinem Boden mit einer oder mehreren Wiegezellen 103 ausgestattet und in Bezug auf die das Dosiergehäuse 13 des Dosierorgans 17 mit dem Gehäuse 5 der Übergabekammer 14 verbindende Leitung 21 zwischen einer Wiegeposition (Fig. 6A; die Abdrehprobe wird durchgeführt), in welcher letztere in den Wiegebehälter 101 mündet, und einer Übergabe- bzw. Normalbetriebsposition (Fig. 6B; die Abdrehprobe ist beendet und es kann die Verteilarbeit stattfinden), in welcher der Wiegebehälter 101 in die Übergabekammer 14 mündet, um eine Schwenkachse S₁ schwenkbar gelagert. Die Schwenkachse S₁ des Wiegebehälters 101 ist dabei im vorliegenden Fall am unteren Ende der Leitung 21 in deren Umfangsbereich angeordnet und erstreckt sich im Wesentlichen horizontal, d.h. senkrecht zu der Leitung 21. Das Gehäuse 5 der Übergabekammer 14 ist seinerseits in Bezug auf die es mit dem Dosiergehäuse 13 des Dosierorgans 17 verbindende Leitung 21 zwischen der Wiegeposition (Fig. 6A), in welcher es von der Leitung 21 fort verschwenkt ist, und der Übergabe- bzw. Normalbetriebsposition (Fig. 6B), in welcher sowohl der Wiegebehälter 101 als auch die den Auslass 20 des Dosiergehäuses 13 mit dem Gehäuse 5 der Übergabekammer 14 verbindende Leitung 21 in die Übergabekammer 14 einmündet, um eine Schwenkachse S₂ schwenkbar gelagert. Letztere ist im vorliegenden Fall gleichfalls am unteren Ende der Leitung 21 in deren Umfangsbereich angeordnet und erstreckt sich im Wesentlichen horizontal, d.h. senkrecht zu der Leitung 21, sowie insbesondere parallel zur Schwenkachse S₁ des Wiegebehälters 101. In diesem Fall ist eine separate Übergabeleitung 104 (siehe Fig. 4 und 6), welche den Wiegebehälter 101 mit der Übergabekammer 14 verbindet, entbehrlich, weil der Wiegebehälter 101 nach Beendigung der Abdrehprobe überkopf in die Übergabekammer 14 entleert wird (Fig. 6B), um das anlässlich der Abdrehprobe gesammelte Verteilgut an die Förderleitung 6 zu übergeben und auszubringen. Das Gehäuse 5 der Übergabekammer 14 weist zu diesem Zweck, d.h. um den Wiegebehälter 101 in der in der Fig. 6b dargestellten Situation an die Übergabekammer 14 "anzudocken, eine hinsichtlich ihres Umfangsquerschnittes an den Öffnungsquerschnitt des Wiegebehälters 101 angepasste Öffnung 108 auf, welche im Übrigen im oberen Bereich der Übergabekammer 14 angeordnet ist, so dass das Verteilgut rein aufgrund Schwerkraft aus dem Wiegebehälter 101 in die Übergabekammer 14 hineinfallen kann (siehe Fig. 6B). Die Öffnung 108 ist zweckmäßigerweise mit einer geeigneten Abdeckung (nicht zeichnerisch dargestellt) verschließbar, um in der Betriebsposition des mit dem Injektor ausgestatteten Gehäuses 5 (Fig. 6B) die in dessen Übergabekammer 14 herrschenden Strömungsbedingungen bei eingeschaltetem Gebläse 4 nicht zu beeinflussen.

Die in den Fig. 7A bis 7C gezeigte Ausführungsform einer Wiegeeinrichtung, bei der identische und wirkungsgleiche Komponenten mit denselben Bezugszeichen versehen sind, unterscheidet sich von jener gemäß Fig. 6A und 6B vornehmlich dadurch, dass das Gehäuse 5 der Übergabekammer 14 nicht mittels eines Schwenklagers S₂ an der Leitung 21 angelenkt (siehe Fig. 6A und 6B), sondern an einem außerhalb der Zeichnungsebene befindlichen und folglich nicht im Einzelnen dargestellten Drehschieber angeordnet ist, mittels welchem die Übergabekammer 14 in Richtung des Pfeils D (Fig. 7B) zwischen der Wiegeposition (Fig. 7A; die Abdrehprobe wird durchgeführt), in welcher sie außerhalb der sie mit dem Dosierorgan 5 verbindenden Leitung 21 angeordnet ist, und der Übergabe- bzw. Normalbetriebsposition (Fig. 7C), in welcher sowohl der Wiegebehälter 101 als auch die Leitung 21 in sie einmündet, drehbar ist. Ebenfalls erkennbar ist in diesem Fall die der zum "Andocken" des Wiegebehälters 101 an das Gehäuse 5 der Übergabekammer 14 vorgesehenen Öffnung 108 zugeordnete Abdeckung 109 des Wiegebehälters 101, welche in der in den Fig. 7A (die Abdrehprobe wird durchgeführt) und 7C (nach Beendigung der Abdrehprobe wird das in dem Wiegebehälter 101 gesammelte Verteilgut überkopf in die Übergabekammer 14 entleert) wiedergegebenen Situationen geöffnet ist, während sie den Öffnungsquerschnitt des Wiegebehälters 101 verschließt, wenn dieser zwischen der Wiege- (Fig. 7A) und der Übergabe- bzw. Normalbetriebsposition (Fig. 7C) verschwenkt wird (Fig. 7B) und wenn nach Überführung des Verteilgutes aus dem Wiegebehälter 101 in die Übergabekammer 14 wieder bei eingeschaltetem Gebläse 4 (vgl. die Fig. 1) die Verteilarbeit stattfindet.

Im Falle der in den Fig. 8A bis 8C wiedergegebenen Ausführungsform einer Wiegeeinrichtung 100, bei der wiederum identische bzw. wirkungsgleiche Bauteile mit denselben Bezugszeichen versehen und im Übrigen nicht nochmals beschrieben sind, sind sowohl das Gehäuse 5 der Übergabekammer 14 als auch der an seinem Boden mit einer oder mehreren Wiegezellen 103 ausgestattete Wiegebehälter 101 an einem Linearschieber 110 angeordnet, welcher sich im vorliegenden Fall im Wesentlichen horizontal bzw. im Wesentlichen senkrecht zu der das Dosiergehäuse 13 des Dosierorgans 17 mit dem Gehäuse 5 der Übergabekammer 14 verbindenden Leitung 21 an deren unterem Ende erstreckt. Sowohl das Gehäuse 5 der Übergabekammer 14 als auch der Wiegebehälter 101 sind dabei mittels des Linearschiebers 110 gemeinsam zwischen einer Wiegeposition (Fig. 8A; die Abdrehprobe wird durchgeführt), in welcher die Leitung 21 in den Wiegebehälter 101 einmündet und die Übergabekammer 14 seitlich außerhalb des Querschnittes dieser Leitung 21 angeordnet ist, und einer Betriebsposition (Fig. 8C; es kann die Verteilarbeit stattfinden), in welcher die Leitung 21 in die Übergabekammer 14 einmündet und der Wiegebehälter 101 seitlich außerhalb des Querschnittes dieser Leitung 21 angeordnet ist, verlagerbar. Um nach Durchführung einer Abdrehprobe (Fig. 8A) und vor Beginn der Verteilarbeit (Fig. 8C) das in dem Wiegebehälter 101 gesammelte Verteilgut in die Übergabekammer 14 zu überführen und sodann, wenn das Gebläse 4 eingeschaltet wird, über die Förderleitung 6 auszubringen, kann der Wiegebehälter 101 wahlweise mit dem daneben befindlichen Gehäuse 5 der Übergabekammer 14 verbunden bzw. von diesem getrennt werden. Zu diesem Zweck ist im unteren Bereich der den Wiegebehälter 101 von dem Gehäuse 5 der Übergabekammer 14 trennenden Wandung eine schwenkbare Klappe 111 vorgesehen, welche anlässlich der Überführung des in dem Wiegebehälter 101 aufgenommenen Verteilgutes in die Übergabekammer 14 nach Beendigung der Abdrehprobe geöffnet wird (Fig. 8B). Während das Verteilgut hierbei auch rein aufgrund Gravitation in die Übergabekammer 14 überführt werden kann, dient hierzu im vorliegenden Fall ein Abstreifer 112, welcher beispielsweise stationär an der Linearführung 110 oder im Bereich des dem Dosiergehäuse 13 mit dem Dosierorgan 17 abgewandten Endes der Leitung 21 festgelegt ist und sich von oben bis zum Boden des Wiegebehälters 101 erstreckt.

Die - wiederum jeweils unmittelbar stromab des Dosierorgans 17 und stromauf der Übergabekammer 14 angeordnete - Wiegeeinrichtung 100 sowohl der Ausführungsform gemäß den Fig. 9A und 9B als auch der Ausführungsform gemäß den Fig. 10A und 10B kommt im Gegensatz zu den vorherigen Ausführungsbeispielen ohne einen eigenen Wiegebehälter 101 (vgl. Fig. 3 bis 8) aus. Bei der in den Fig. 9A und 9B gezeigten Ausführungsform umfasst die Wiegeeinrichtung 100 stattdessen eine in der das Dosiergehäuse 13 des Dosierorgans 17 mit dem Gehäuse 5 der Übergabekammer 14 verbindenden Leitung 21 angeordnete Klappe 113, welche zwischen einer Wiegeposition (Fig. 9A; die Abdrehprobe wird durchgeführt), in welcher sie den Querschnitt der Leitung 21 verschließt und das dosierte Verteilgut auf der Oberseite der Klappe 113 gesammelt wird, und einer Betriebsposition (Fig. 9B; nach Durchführung der Abdrehprobe wird das auf der Klappe 113 gesammelte Verteilgut in die Übergabekammer 14 überführt, um es über die Förderleitung 6 ausbringen zu können), in welcher sie den Leitungsquerschnitt zumindest teilweise oder insbesondere gänzlich freigibt, verschwenkbar ist. Letzteres gilt freilich auch für die Normalbetriebsposition, in welcher die Klappe 113 einen ungehinderten Durchlass des dosierten Verteilgutes durch die Leitung 21 hindurch in die Übergabekammer 14 zu gewährleisten hat. Um die bei der Durchführung von Abdrehproben dosierte Masse an Verteilgut gravimetrisch zu erfassen, kann die Klappe 113 einerseits an ihrer Schwenkachse S₃ mit einem Drehmoment- oder Torsionssensor ausgestattet sein; andererseits ist es alternativ auch denkbar ist, dass die Klappe 113 an ihrer oberen, dem Dosierorgan 17 zugewandten Seite mit einer oder mehreren Wiegezellen (nicht gezeigt) versehen ist. Der im Innern der Leitung 21 angeordnete Anschlag bzw. Sitz der Klappe 113 in deren Schließposition sollte ferner mit entsprechenden Dichtlippen versehen sein, um im Falle einer Beaufschlagung der Übergabekammer 14 mit einem Blasluftstrom während der Durchführung einer Abdrehprobe keine luftdruckbedingten Abdrehfehler zu verursachen.

Bei der in den Fig. 10A und 10B dargestellten Ausführungsform umfasst die Wiegeeinrichtung 100 anstelle der Klappe 113 (siehe Fig. 9A und 9B) einen in der das Dosiergehäuse 13 des Dosierorgans 17 mit dem Gehäuse 5 der Übergabekammer 14 verbindenden Leitung 21 angeordneten Schieber 118, welcher zwischen einer Wiegeposition (Fig. 10A; die Abdrehprobe wird durchgeführt), in welcher er den Querschnitt der Leitung 21 verschließt und das dosierte Verteilgut auf der Oberseite des Schiebers 118 gesammelt wird, und einer Betriebsposition (Fig. 10B; nach Durchführung der Abdrehprobe wird das auf dem Schieber 118 gesammelte Verteilgut in die Übergabekammer 14 überführt, um es über die Förderleitung 6 ausbringen zu können), in welcher er den Leitungsquerschnitt zumindest teilweise oder insbesondere gänzlich freigibt, verlagerbar ist. Letzteres gilt wiederum freilich auch für die Normalbetriebsposition, in welcher der Scheiber 118 einen ungehinderten Durchlass des dosierten Verteilgutes durch die Leitung 21 hindurch in die Übergabekammer 14 zu gewährleisten hat. Um die bei der Durchführung von Abdrehproben dosierte Masse an Verteilgut gravimetrisch zu erfassen, ist der Schieber 118 an seiner oberen, dem Dosierorgan 17 zugewandten Seite mit einer oder mehreren Wiegezellen (nicht gezeigt) versehen. Der Scheiber 118 ist im vorliegenden Fall entlang einer Linearführung 119, welche sich im Wesentlichen senkrecht zur Leitung 21, also im Wesentlichen horizontal, erstreckt, hin und her verschiebbar, wobei er in seiner Schließ- bzw. Wiegeposition gemäß Fig. 10A gegen im Innern der Leitung 21 vorgesehene Dichtlippen 120 anstößt. Die Verlagerung des Schiebers 118 geschieht zweckmäßigerweise ebenso wie das Verschwenken der Klappe 113 (Fig. 9A und 9B) mittels geeigneter, wie motorischer bzw. aktuatorischer, Antriebe (nicht gezeigt), welche von der Steuer- und/oder Regeleinrichtung der Verteilmaschine befehligt sind.

Die in den Fig. 11 bis 13 schematisch wiedergegebenen Ausführungsformen von Wiegeeinrichtungen 100, welche unmittelbar stromab des Dosierorgans 17 an dem Gehäuse 5 der Übergabekammer 14 positioniert sind, sehen gleichfalls keinen zusätzlichen Wiegebehälter vor, sondern dient stattdessen das Gehäuse 5 der Übergabekammer 14 selbst als "Wiegebehälter", d.h. anlässlich der Durchführung von Abdrehproben wird das mittels des Dosierorgans 17 dosierte Verteilgut direkt in der Übergabekammer 14 gesammelt. Die Übergabekammer 14 muss zu diesem Zweck freilich von dem Gebläse 4 (vgl. die Fig. 1) entkoppelt oder muss letzteres deaktiviert werden, was zweckmäßigerweise mittels der Steuer- und/oder Regeleinrichtung ausgelöst werden kann. Nach Beendigung der Abdrehprobe wird das Gebläse 4 dann wider aktiviert, um das Verteilgut aus der Übergabekammer 14 in die Förderleitung 6 zu überführen und auszubringen, wenn bzw. bevor die "normale" Verteilarbeit wieder beginnt.

So ist bei der in der Fig. 11 gezeigten Ausführungsform der Wiegeeinrichtung 100 vorgesehen, dass das Gehäuse 5 der Übergabekammer 14 - ähnlich der Klappe 113 des in den Fig. 9A und 9B gezeigten Ausführungsbeispiels - mittels eines Schwenklagers um die Achse S₄ schwenkbar am Umfang des unteren Endes der Leitung 21 angelenkt ist, wobei das Schwenklager wiederum mit einem Drehmoment- oder Torsionssensor 115 versehen ist, um die in der Übergabekammer 14 anlässlich einer Abdrehprobe gesammelte Masse an Verteilgut gravimetrisch zu erfassen. Anstelle des mit Sensoren 115 versehenen Schwenklagers ist das Gehäuse 5 der Übergabekammer 14 bei der in der Fig. 12 wiedergegebenen Ausführungsform der Wiegeeinrichtung 100 zu demselben Zweck mittels Wiegezellen 116 mit dem unteren Ende der Leitung 21 verbunden. Das in der Fig. 13 dargestellte Ausführungsbeispiel der Wiegeeinrichtung 100 unterscheidet sich hiervon im Grunde nur dadurch, dass lediglich ein unterer Abschnitt des Gehäuses 5 der Übergabekammer 14 mittels der Wiegezellen 116 mit einem oberen Abschnitt desselben verbunden ist.

Die Wiegeeinrichtung 100 gemäß der in den Fig. 14A und 14B gezeigten Ausführungsform ist schließlich stromab des Dosierorgans 17 im Innern des Gehäuses 5 der Übergabekammer 14 - bzw. genauer: am Boden der Übergabekammer 14 - angeordnet und umfasst eine oder mehrere Wiegezellen 117. Während die Wiegezellen 117 während der Durchführung von Abdrehproben bei abgeschaltetem oder von der Übergabekammer 14 entkoppeltem Gebläse 4 freiliegen, so dass das mittels des Dosierorgans 17 dosierte Verteilgut auf ihnen gesammelt wird (Fig. 14A), ist den Wiegezellen 117 vorzugsweise ein z.B. in Richtung des Pfeils P der Fig. 14A wirksamer Schieber 117a zugeordnet, mittels welchem die Wiegezellen 117 abgedeckt werden können, wenn die "normale" Verteilarbeit stattfindet oder auch wenn zu Beginn derselben das anlässlich der Abdrehprobe zuvor in der Übergabekammer 14 gesammelte Verteilgut durch Anschalten des Gebläses 4 bzw. Koppeln desselben mit dem Gehäuse 5 der Übergabekammer 14 über die Förderleitung 6 ausgebracht werden soll (Fig. 13B), so dass die Wiegezellen 117 nicht dem mit Verteilgutpartikeln beaufschlagten Luftstrom ausgesetzt sind.

## Patentansprüche

1. Verfahren zur Steuerung und/oder Regelung eines Dosierorgans (17) einer pneumatischen Verteilmaschine, umfassend
- wenigstens eine dem Dosierorgan (17) nachgeordnete Übergabekammer (5) zur Überführung von mittels des Dosierorgans (17) dosiertem Verteilgut in wenigstens eine Förderleitung (6);
- wenigstens ein Gebläse (4) zur Beaufschlagung der Förderleitung (6) mit einem Luftstrom; und
- wenigstens ein der Förderleitung (6) nachgeordnetes Verteilorgan,
wobei wenigstens eine Abdrehprobe durchgeführt wird, indem das mit einem bestimmten Verteilguttyp beaufschlagte Dosierorgan (17) über einen vorherbestimmten Probenahmezeitraum mit einem vorherbestimmten Betriebsparameter betätigt und die während der Abdrehprobe dosierte Masse an Verteilgut mittels einer Wiegeeinrichtung (100) gravimetrisch erfasst wird, wonach aus der derart erhaltenen Masse an Verteilgut bezogen auf den Probenahmezeitraum und den Betriebsparameter des Dosierorgans (17) eine funktionale Beziehung zwischen dem Betriebsparameter des Dosierorgans (17) und dem hiermit dosierten Ist-Massenstrom an Verteilgut errechnet und das Dosierorgan (17) sodann in Abhängigkeit dieser funktionalen Beziehung auf einen Soll-Massenstrom an Verteilgut gesteuert und/oder geregelt wird, **dadurch gekennzeichnet, dass** die während der Abdrehprobe dosierte Masse an Verteilgut stromab des Dosierorgans (17) und stromauf der Übergabekammer (5) oder in der Übergabekammer (5) mittels der Wiegeeinrichtung (100) gravimetrisch erfasst wird, wonach dieses Verteilgut an die Förderleitung (6) übergeben und ausgebracht wird.

2. Verfahren nach Anspruch 1, **dadurch gekennzeichnet, dass** das während der Abdrehprobe dosierte Verteilgut
- stromab des Dosierorgans (17) und stromauf der Übergabekammer (5) gesammelt, seine Masse gravimetrisch erfasst und sodann der Übergabekammer (5) aufgegeben wird; oder
- in der Übergabekammer (5) bei von dieser entkoppelten und/oder deaktiviertem Gebläse (4) gesammelt und seine Masse gravimetrisch erfasst wird, wonach die Übergabekammer (5) mit dem Gebläse (4) gekoppelt und/oder letzteres aktiviert wird.

3. Verfahren nach Anspruch 1 oder 2, **dadurch gekennzeichnet, dass** die aus der anlässlich einer Abdrehprobe gravimetrisch erfassten Masse an einem bestimmten Verteilguttyp bezogen auf den Probenahmezeitraum und den Betriebsparameter des Dosierorgans (17) erhaltene funktionale Beziehung zwischen dem Betriebsparameter des Dosierorgans (17) und dem Ist-Massenstrom an Verteilgut, insbesondere in Form eines Dosierfaktors, gespeichert wird, um diese funktionale Beziehung bedarfsweise abrufen zu können, wobei sie insbesondere anlässlich der Durchführung einer weiteren Abdrehprobe aktualisiert wird.

4. Verfahren nach einem der Ansprüche 1 bis 3, **dadurch gekennzeichnet, dass** die während der Abdrehprobe dosierte Masse an Verteilgut an die Förderleitung (6) übergeben und ausgebracht wird, während oder unmittelbar bevor das Dosierorgan (17) nach Beendigung der Abdrehprobe in seinen Normalbetriebszustand versetzt wird, in welchem es gemäß dem gewünschten Soll-Massenstrom gesteuert und/oder geregelt wird.

5. Verfahren nach einem der Ansprüche 1 bis 4, **dadurch gekennzeichnet, dass** bei der Steuerung und/oder Regelung des Dosierorgans (17) in Abhängigkeit der funktionalen Beziehung zwischen dem Betriebsparameter des Dosierorgans (17) und der hiermit anlässlich der vorausgegangenen Abdrehprobe dosierten Masse an Verteilgut auf den gewünschten Soll-Massenstrom an Verteilgut ferner wenigstens ein Verteilparameter aus der Gruppe Arbeitsbreite, Fahrgeschwindigkeit und Ist-Position der Verteilmaschine berücksichtigt wird.

6. Verfahren nach einem der Ansprüche 1 bis 5, **dadurch gekennzeichnet, dass** für die Abdrehprobe ein vorherbestimmter Probenahmezeitraum berücksichtigt wird, zu dessen Beginn das Dosierorgan (17) bereits betätigt worden ist, wobei zur Erfassung der während der Abdrehprobe dosierten Masse an Verteilgut die Differenz der Masse am Ende des Probenahmezeitraums und zu Beginn des Probenahmezeitraums ermittelt wird.

7. Pneumatische Verteilmaschine, umfassend
- wenigstens ein Dosierorgan (17);
- wenigstens eine dem Dosierorgan (17) nachgeordnete Übergabekammer (5) zur Überführung von mittels des Dosierorgans (17) dosiertem Verteilgut in wenigstens eine Förderleitung (6);
- wenigstens ein Gebläse (4) zur Beaufschlagung der Förderleitung (6) mit einem Luftstrom;
- wenigstens ein der Förderleitung nachgeordnetes Verteilorgan; und
- wenigstens eine Wiegeeinrichtung (100), welcher ein bestimmter auszubringender Verteilguttyp durch Betätigung des Dosierorgans (17) über einen vorherbestimmten Probenahmezeitraum mit einem vorherbestimmten Betriebsparameter während einer Abdrehprobe zuführbar ist, um die derart dosierte Masse an Verteilgut gravimetrisch zu erfassen,
insbesondere zur Durchführung eines Verfahrens nach einem der vorangehenden Ansprüche, **dadurch gekennzeichnet, dass** die Wiegeeinrichtung (100) stromab des Dosierorgans (17) und stromauf der Übergabekammer (5), in oder an der Übergabekammer (5) angeordnet ist, so dass die während der Abdrehprobe dosierte Masse an Verteilgut an die Förderleitung (6) übergebbar und ausbringbar ist.

8. Verteilmaschine nach Anspruch 7, **dadurch gekennzeichnet, dass** sie ferner eine sowohl mit der Wiegeeinrichtung (100) als auch mit dem Dosierorgan (17) in Wirkverbindung stehende Steuer- und/oder Regeleinrichtung aufweist, welche aus der mittels der Wiegeeinrichtung (100) erfassten Masse an Verteilgut bezogen auf den Probenahmezeitraum und den Betriebsparameter des Dosierorgans (17) während der Abdrehprobe zur Errechnung einer funktionalen Beziehung zwischen dem Betriebsparameter des Dosierorgans (17) und dem hiermit dosierten Ist-Massenstrom an Verteilgut sowie zur anschließenden Steuerung und/oder Regelung des Dosierorgans (17) in Abhängigkeit dieser funktionalen Beziehung auf einen Soll-Massenstrom an Verteilgut ausgebildet ist

9. Verteilmaschine nach Anspruch 7 oder 8, **dadurch gekennzeichnet, dass** die Wiegeeinrichtung (100) stromab des Dosierorgans (17) und stromauf der Übergabekammer (5) angeordnet ist, wobei das Verteilgut wahlweise entweder der Wiegeeinrichtung (100) oder an dieser vorbei der Übergabekammer (5) zuführbar ist.

10. Verteilmaschine nach Anspruch 9, **dadurch gekennzeichnet, dass** die Wiegeeinrichtung (100) einen Wiegebehälter (101) umfasst, welcher mittels einer in einem das Dosierorgan (17) mit der Übergabekammer (5) verbindenden Leitung (21) angeordneten Weiche (102) wahlweise mit dem Dosierorgan (17) verbindbar oder von diesem trennbar ist, wobei der Wiegebehälter (101) insbesondere
- wenigstens eine in seinem Innern angeordnete Wiegezelle (103) aufweist; oder
- von der das Dosierorgan (17) mit der Übergabekammer (5) verbindenden Leitung (21) mechanisch entkoppelt ist und mit einer äußeren Bahälterwaage (106) in Verbindung steht.

11. Verteilmaschine nach Anspruch 9, **dadurch gekennzeichnet, dass** die Wiegeeinrichtung (100) einen Wiegebehälter (101) mit wenigstens einer in seinem Innern angeordneten Wiegezelle (103) aufweist und in Bezug auf eine das Dosierorgan (17) mit der Übergabekammer (5) verbindende Leitung (21) zwischen wenigstens einer Wiegeposition, in welcher letztere in den Wiegebehälter (101) mündet, und wenigstens einer Übergabeposition, in welcher der Wiegebehälter (101) in die Übergabekammer (5) mündet, schwenkbar gelagert ist, wobei die Übergabekammer (5) insbesondere
- an einem Drehschieber angeordnet ist, mittels welchem sie zwischen der wenigstens einen Wiegeposition, in welcher sie außerhalb der sie mit dem Dosierorgan (17) verbindenden Leitung (21) angeordnet ist, und der wenigstens einen Übergabeposition, in welcher sowohl der Wiegebehälter (101) als auch die das Dosierorgan (17) mit der Übergabekammer (5) verbindende Leitung (21) in sie einmündet, drehbar ist; oder
- ihrerseits in Bezug auf die sie mit dem Dosierorgan (17) verbindende Leitung (21) zwischen der wenigstens einen Wiegeposition, in welcher sie von der sie mit dem Dosierorgan (17) verbindenden Leitung (21) fort verschwenkt ist, und der wenigstens einen Übergabeposition, in welcher sowohl der Wiegebehälter (101) als auch die das Dosierorgan (17) mit der Übergabekammer (5) verbindende Leitung (21) in sie einmündet, schwenkbar gelagert ist.

12. Verteilmaschine nach Anspruch 9, **dadurch gekennzeichnet, dass** die Wiegeeinrichtung (100) einen Wiegebehälter (101) mit wenigstens einer in seinem Innern angeordneten Wiegezelle (103) aufweist und sowohl die Übergabekammer (5) als auch der Wiegebehälter (101) an einem, insbesondere im Wesentlichen senkrecht zu einer das Dosierorgan (17) mit der Übergabekammer (5) verbindenden Leitung (21) wirksamen, Linearschieber (110) angeordnet sind, wobei die Übergabekammer (5) und der Wiegebehälter (101) zwischen wenigstens einer Wiegeposition, in welcher die das Dosierorgan (17) mit der Übergabekammer (5) verbindende Leitung (21) in den Wiegebehälter (101) mündet und die Übergabekammer (5) außerhalb des Querschnittes dieser Leitung (21) angeordnet ist, und wenigstens einer Betriebsposition, in welcher die das Dosierorgan (17) mit der Übergabekammer (5) verbindende Leitung (21) in die Übergabekammer (5) mündet und der Wiegebehälter (101) außerhalb des Querschnittes dieser Leitung (21) angeordnet ist, verlagerbar sind, und wobei ferner der Wiegebehälter (101), insbesondere mittels einer Klappe (111), wahlweise mit der Übergabekammer (5) verbindbar und von dieser trennbar ist.

13. Verteilmaschine nach Anspruch 9, **dadurch gekennzeichnet, dass** die Wiegeeinrichtung (100)
- eine in der das Dosierorgan (17) mit der Übergabekammer (5) verbindenden Leitung (23) angeordnete Klappe (113) aufweist, welche zwischen einer Wiegeposition, in welcher sie den Leitungsquerschnitt verschließt, und einer Betriebsposition, in welcher sie den Leitungsquerschnitt zumindest teilweise freigibt, verschwenkbar ist, wobei die Klappe (113) mit einer Wiegezelle und/oder ihre Schwenkachse (S₃) mit einem Drehmoment- oder Torsionssensor (114) ausgestattet ist; oder
- einen in der das Dosierorgan (17) mit der Übergabekammer (5) verbindenden Leitung (23) angeordneten Schieber (118) aufweist, welcher zwischen einer Wiegeposition, in welcher er den Leitungsquerschnitt verschließt, und einer Betriebsposition, in welcher er den Leitungsquerschnitt zumindest teilweise freigibt, verlagerbar ist, wobei der Schieber (118) mit einer Wiegezelle ausgestattet ist.

14. Verteilmaschine nach Anspruch 7 oder 8, **dadurch gekennzeichnet, dass** die Wiegeeinrichtung (100) eine im Innern der Übergabekammer (5), insbesondere an deren Boden, angeordnete Wiegezelle (117) umfasst, wobei die Wiegezelle (117) insbesondere mittels eines innenseitigen Schiebers (117a) freilegbar und abdeckbar ist.

15. Verteilmaschine nach Anspruch 7 oder 8, **dadurch gekennzeichnet, dass** zumindest ein unterer Abschnitt der Übergabekammer (5)
- mittels wenigstens einer Wiegezelle (116); oder
- mittels wenigstens eines, mit einem Drehmoment- oder Torsionssensor (115) versehenen Schwenklagers mit der das Dosierorgan (17) mit der Übergabekammer (5) verbindenden Leitung (21) in Verbindung steht.

16. Verteilmaschine nach Anspruch 14 oder 15, **dadurch gekennzeichnet, dass** die Steuer- und/oder Regeleinrichtung das Gebläse (4) deaktiviert oder von der Übergabekammer (5) trennt oder bei aktiviertem Gebläse (4) eine Warnmeldung generiert, wenn die Wiegeeinrichtung (100) anlässlich einer Abdrehprobe die Masse an hierbei dosiertem Verteilgut erfasst.

17. Verteilmaschine nach Anspruch 8, **dadurch gekennzeichnet, dass** die Steuer- und/oder Regeleinrichtung
- zur Speicherung der, aus der anlässlich einer Abdrehprobe gravimetrisch erfassten Masse an einem bestimmten Verteilguttyp bezogen auf den Probenahmezeitraum und den Betriebsparameter des Dosierorgans (17) erhaltenen, funktionalen Beziehung zwischen dem Betriebsparameter des Dosierorgans (17) und dem Ist-Massenstrom an Verteilgut, insbesondere in Form eines Dosierfaktors, ausgebildet ist oder mit einer hierzu geeigneten Speichereinrichtung in Verbindung steht, um diese funktionale Beziehung bedarfsweise abrufen zu können, wobei die Steuer- und/oder Regeleinrichtung insbesondere zur Aktualisierung der funktionalen Beziehung anlässlich der Durchführung einer weiteren Abdrehprobe ausgebildet ist; und/oder
- zum Versetzen des Dosierorgans (17) in seinen Normalbetriebszustand, in welchem sie das Dosierorgan (17) gemäß dem gewünschten Soll-Massenstrom steuert und/oder regelt, ausgebildet ist, während oder unmittelbar nachdem die anlässlich der Abdrehprobe dosierte Masse an Verteilgut nach Beendigung der Abdrehprobe an die Förderleitung (6) übergeben und ausgebracht wird; und/oder
- bei der Steuerung und/oder Regelung des Dosierorgans (17) in Abhängigkeit der funktionalen Beziehung zwischen dem Betriebsparameter des Dosierorgans (17) und der hiermit anlässlich der vorausgegangenen Abdrehprobe dosierten Masse an Verteilgut auf den gewünschten Soll-Massenstrom an Verteilgut ferner wenigstens einen Verteilparameter aus der Gruppe Arbeitsbreite, Fahrgeschwindigkeit und Ist-Position der Verteilmaschine berücksichtigt.

## Claims

1. Method for controlling and/or regulating a metering element (17) of a pneumatic spreading machine, comprising
- at least one transfer chamber (5) which is arranged downstream of the metering element (17) and which serves for the transfer, into at least one conveying line (6), of material for spreading that has been metered by means of the metering element (17);
- at least one blower (4) for charging the conveying line (6) with an air stream; and
- at least one spreading element arranged downstream of the conveying line (6),
wherein at least one calibration test is performed by virtue of the metering element (17), charged with a particular type of material for spreading, being actuated over a predetermined test duration with a predetermined operating parameter and the mass of material for spreading metered during the calibration test being gravimetrically detected by means of a weighing device (100), following which, from the mass of material for spreading thus obtained in relation to the test duration and the operating parameters of the metering element (17), a functional relationship between the operating parameter of the dosing element (17) and the actual mass flow of material for spreading metered by means of said metering element is calculated, and the metering element (17) is then controlled and/or regulated to a setpoint mass flow of material for spreading in a manner dependent on this functional relationship, **characterized in that** the mass of material for spreading metered during the calibration test by means of the weighing device (100) is gravimetrically detected downstream of the metering element (17) and upstream of the transfer chamber (5) or in the transfer chamber (5), following which said material for spreading is transferred to the conveying line (6) and dispensed.

2. Method according to Claim 1, **characterized in that** the material for spreading metered during the calibration test
- is collected downstream of the metering element (17) and upstream of the transfer chamber (5), the mass thereof is gravimetrically detected, and it is then released to the transfer chamber (5); or
- is collected in the transfer chamber (5) when the blower (4) is decoupled from said transfer chamber and/or deactivated, and the mass thereof is gravimetrically detected, following which the transfer chamber (5) is coupled to the blower (4) and/or the latter is activated.

3. Method according to Claim 1 or 2, **characterized in that** the functional relationship, obtained from the mass of a particular type of material for spreading gravimetrically detected during a calibration test in relation to the test duration and the operating parameter of the metering element (17), between the operating parameter of the metering element (17) and the actual mass flow of material for spreading is stored, in particular in the form of a metering factor, in order for said functional relationship to be retrievable when required, wherein it is updated in particular when a further calibration test is carried out.

4. Method according to any of Claims 1 to 3, **characterized in that** the mass of material for spreading metered during the calibration test is transferred to the conveying line (6) and dispensed as or immediately before the metering element (17) is, after the end of the calibration test, returned to its normal operating state, in which it is controlled and/or regulated in accordance with the desired setpoint mass flow.

5. Method according to any of Claims 1 to 4, **characterized in that**, in the control and/or regulation of the metering element (17), in a manner dependent on the functional relationship between the operating parameter of the metering element (17) and the mass of material for spreading metered during the preceding calibration test, to the desired setpoint mass flow of material for spreading, at least one spreading parameter from the group comprising working width, travelling speed and actual position of the spreading machine is also taken into consideration.

6. Method according to any of Claims 1 to 5, **characterized in that**, for the calibration test, a predetermined test duration is taken into consideration, at the start of which the metering element (17) was already actuated, wherein, for the detection of the mass of material for spreading metered during the calibration test, the difference between the mass at the end of the test duration and at the start of the test duration is determined.

7. Pneumatic spreading machine, comprising
- at least one metering element (17);
- at least one transfer chamber (5) which is arranged downstream of the metering element (17) and which serves for transferring, into at least one conveying line (6), material for spreading that has been metered by means of the metering element (17);
- at least one blower (4) for charging the conveying line (6) with an air stream;
- at least one spreading element arranged downstream of the conveying line; and
- at least one weighing device (100) to which a particular type of material for spreading which is to be dispensed can be fed by actuation of the metering element (17) over a predetermined test duration with a predetermined operating parameter during a calibration test, in order to gravimetrically detect the mass of material for spreading thus metered,
in particular for carrying out a method according to any of the preceding claims, **characterized in that** the weighing device (100) is arranged downstream of the metering element (17) and upstream of the transfer chamber (5), in or at the transfer chamber (5), such that the mass of material for spreading metered during the calibration test can be transferred to the conveying line (6) and dispensed.

8. Spreading machine according to Claim 7, **characterized in that** it furthermore has a control and/or regulating device which is operatively connected both to the weighing device (100) and to the metering element (17) and which is designed to, from the mass of material for spreading detected by means of the weighing device (100) in relation to the test duration and the operating parameter of the metering element (17) during the calibration test, calculate a functional relationship between the operating parameter of the dosing element (17) and the actual mass flow of material for spreading metered by means of said metering element, and to subsequently control and/or regulate the metering element (17) to a setpoint mass flow of material for spreading in a manner dependent on this functional relationship.

9. Spreading machine according to Claim 7 or 8, **characterized in that** the weighing device (100) is arranged downstream of the metering element (17) and upstream of the transfer chamber (5), wherein the material for spreading can be fed selectively either to the weighing device (100) or, past the latter, to the transfer chamber (5).

10. Spreading machine according to Claim 9, **characterized in that** the weighing device (100) comprises a weighing container (101) which, by means of a switch (102) arranged in a line (21) connecting the metering element (17) to the transfer chamber (5), is selectively connectable to the metering element (17) or separable therefrom, wherein the weighing container (101) in particular
- has at least one weighing cell (103) arranged in the interior thereof; or
- is mechanically decoupled from the line (21) connecting the metering element (17) to the transfer chamber (5), and is connected to an external container balance (106).

11. Spreading machine according to Claim 9, **characterized in that** the weighing device (100) has a weighing container (101) with at least one weighing cell (103) arranged in the interior thereof and is mounted so as to be pivotable, in relation to a line (21) connecting the metering element (17) to the transfer chamber (5), between at least one weighing position, in which said line opens into the weighing container (101), and at least one transfer position, in which the weighing container (101) opens into the transfer chamber (5), wherein the transfer chamber (5) in particular
- is arranged on a rotary slide by means of which said transfer chamber is rotatable between the at least one weighing position, in which said transfer chamber is arranged outside the line (21) connecting said transfer chamber to the metering element (17), and the at least one transfer position, in which both the weighing container (101) and the line (21) connecting the metering element (17) to the transfer chamber (5) open into said transfer chamber; or
- is itself mounted so as to be pivotable, in relation to the line (21) connecting said transfer chamber to the metering element (17), between the at least one weighing position, in which said transfer chamber is pivoted away from the line (21) connecting said transfer chamber to the metering element (17), and the at least one transfer position, in which both the weighing container (101) and the line (21) connecting the metering element (17) to the transfer chamber (5) open into said transfer chamber.

12. Spreading machine according to Claim 9, **characterized in that** the weighing device (100) has a weighing container (101) with at least one weighing cell (103) arranged in the interior thereof, and both the transfer chamber (5) and the weighing container (101) are arranged on a linear slide (110) which acts in particular substantially perpendicularly with respect to a line (21) connecting the metering element (17) to the transfer chamber (5), wherein the transfer chamber (5) and the weighing container (101) are displaceable between at least one weighing position, in which the line (21) connecting the metering element (17) to the transfer chamber (5) opens into the weighing container (101) and the transfer chamber (5) is arranged outside the cross section of said line (21), and at least one operating position, in which the line (21) connecting the metering element (17) to the transfer chamber (5) opens into the transfer chamber (5) and the weighing container (101) is arranged outside the cross section of said line (21), and wherein furthermore, the weighing container (101) is, in particular by means of a flap (111), selectively connectable to the transfer chamber (5) and separable therefrom.

13. Spreading machine according to Claim 9, **characterized in that** the weighing device (100)
- has a flap (113) which is arranged in the line (23) connecting the metering element (17) to the transfer chamber (5) and which is pivotable between a weighing position, in which it closes the line cross section, and an operating position, in which it at least partially opens up the line cross section, wherein the flap (113) is equipped with a weighing cell and/or the pivot axle (S3) thereof is equipped with a torque or torsion sensor (114); or
- has a slide (118) arranged in the line (23) connecting the metering element (17) to the transfer chamber (5), which slide is displaceable between a weighing position, in which it closes the line cross section, and an operating position, in which it at least partially opens up the line cross section, wherein the slide (118) is equipped with a weighing cell.

14. Spreading machine according to Claim 7 or 8, **characterized in that** the weighing device (100) comprises a weighing cell (117) which is arranged in the interior of the transfer chamber (5), in particular at the base thereof, wherein the weighing cell (117) can in particular be exposed and covered by means of a slide (117a) situated at the inside.

15. Spreading machine according to Claim 7 or 8, **characterized in that** at least one lower portion of the transfer chamber (5) is connected
- by means of at least one weighing cell (116); or
- by means of at least one pivot bearing equipped with a torque or torsion sensor (115)
to the line (21) connecting the metering element (17) to the transfer chamber (5).

16. Spreading machine according to Claim 14 or 15, **characterized in that** the control and/or regulating device deactivates the blower (4) or separates said blower from the transfer chamber (5), or, in the case of the blower (4) being active, generates a warning message if the weighing device (100), during a calibration test, detects the mass of material for spreading hereby metered.

17. Spreading machine according to Claim 8, **characterized in that** the control and/or regulating device
- is designed to store the functional relationship, obtained from the mass of a particular type of material for spreading gravimetrically detected during a calibration test in relation to the test duration and the operating parameter of the metering element (17), between the operating parameter of the metering element (17) and the actual mass flow of material for spreading, in particular in the form of a metering factor, or is connected to a memory device suitable for this purpose, in order for said functional relationship to be retrievable when required, wherein the control and/or regulating device is in particular designed to update the functional relationship when a further calibration test is carried out; and/or
- is designed to set the metering element (17) into its normal operating state, in which it controls and/or regulated the metering element (17) in accordance with the desired setpoint mass flow, as or immediately after the mass of material for spreading metered during the calibration test is, after the end of the calibration test, transferred to the conveying line (6) and dispensed; and/or
- also takes into consideration at least one spreading parameter from the group comprising working width, travelling speed and actual position of the spreading machine in the control and/or regulation of the metering element (17), in a manner dependent on the functional relationship between the operating parameter of the metering element (17) and the mass of material for spreading metered during the preceding calibration test, to the desired setpoint mass flow of material for spreading.

## Revendications

1. Procédé de commande et/ou de réglage de l'organe de dosage (17) d'une machine d'épandage pneumatique, comprenant :
- au moins un compartiment de transfert (5) placé en aval de l'organe de dosage (17) pour le transfert de produit à épandre à l'aide de l'organe de dosage (17) dans au moins une conduite de transport (6) ;
- au moins une soufflerie (4) permettant d'alimenter la conduite de transport (6) avec un flux d'air ; et
- au moins un organe d'épandage placé en aval de la conduite de transport (6) ;
au moins un échantillonnage d'étalonnage étant réalisé en ce que l'organe de dosage (17) alimenté avec un type de produit à épandre défini est actionné, pendant une période de prise d'échantillon prédéfinie, selon un paramètre de fonctionnement prédéfini et que la masse de produit à épandre dosée pendant l'échantillonnage d'étalonnage est déterminée de façon gravimétrique à l'aide d'un dispositif de pesée (100) ;
après quoi on calcule à partir de la masse de produit à épandre obtenue de telle sorte par rapport à la période de prise d'échantillon et du paramètre de fonctionnement de l'organe de dosage (17) une relation fonctionnelle entre le paramètre de fonctionnement de l'organe de dosage (17) et le débit massique réel ainsi dosé de produit à épandre et l'organe de dosage (17) est alors commandé et/ou réglé en fonction de cette relation fonctionnelle sur un débit massique théorique de produit à épandre, **caractérisé en ce que** la masse de produit à épandre dosée pendant l'échantillonnage d'étalonnage est déterminée de façon gravimétrique en aval de l'organe de dosage (17) et en amont du compartiment de transfert (5) ou dans le compartiment de transfert (5), à l'aide du dispositif de pesée (100), après quoi ce produit à épandre est transféré à la conduite de transport (6) et expulsé.

2. Procédé selon la revendication 1, **caractérisé en ce que** le produit à épandre dosé pendant l'échantillonnage d'étalonnage :
- est accumulé en aval de l'organe de dosage (17) et en amont du compartiment de transfert (5), sa masse est déterminée de façon gravimétrique puis remise au compartiment de transfert (5) ; ou
- est accumulé dans le compartiment de transfert (5) par la soufflerie (4) découplée et/ou désactivée de lui et sa masse est déterminée de façon gravimétrique, après quoi le compartiment de transfert (5) est couplé à la soufflerie (4) et/ou cette dernière est activée.

3. Procédé selon la revendication 1 ou 2, **caractérisé en ce qu'**à partir de la masse de type de produit à épandre défini déterminée de façon gravimétrique à l'occasion d'un échantillonnage d'étalonnage, la relation fonctionnelle obtenue pour la période de prise d'échantillon et le paramètre de fonctionnement de l'organe de dosage (17) est mémorisée entre le paramètre de fonctionnement de l'organe de dosage (17) et le débit massique réel de produit à épandre obtenu, notamment sous la forme d'un facteur de dosage, pour pouvoir rappeler cette relation fonctionnelle si besoin, celle-ci étant notamment actualisée lors de la réalisation d'un échantillonnage d'étalonnage supplémentaire.

4. Procédé selon l'une quelconque des revendications 1 à 3, **caractérisé en ce que** la masse de produit à épandre dosée pendant l'échantillonnage d'étalonnage est transférée à la conduite de transport (6) et expulsée, déplacée pendant ou directement avant l'organe de dosage (17), à la fin l'échantillonnage d'étalonnage, dans son état de fonctionnement normal dans lequel il est commandé et/ou réglé selon le débit massique théorique souhaité.

5. Procédé selon l'une quelconque des revendications 1 à 4, **caractérisé en ce qu'**en cas de commande et/ou de réglage de l'organe de dosage (17) en fonction de la relation fonctionnelle entre le paramètre de fonctionnement de l'organe de dosage (17) et la masse de produit à épandre dosée à l'occasion de l'échantillonnage d'étalonnage précédent pour atteindre le débit massique théorique souhaité de produit à épandre, au moins un paramètre d'épandage appartenant au groupe largeur de travail, vitesse de conduite et position réelle de la machine d'épandage est en outre en outre pris en compte.

6. Procédé selon l'une quelconque des revendications 1 à 5, **caractérisé en ce que** pour l'échantillonnage d'étalonnage, une période de prise d'échantillon prédéfinie au début de laquelle l'organe de dosage (17) est déjà actionné est prise en compte, la différence de la masse à la fin de la période de prise d'échantillon et au début de la période de prise d'échantillon étant calculée pour déterminer la masse de produit à épandre dosée pendant l'échantillonnage d'étalonnage.

7. Machine d'épandage pneumatique, comprenant :
- au moins un organe de dosage (17) ;
- au moins un compartiment de transfert (5) placé en aval de l'organe de dosage (17) pour le transfert de produit à épandre dosé à l'aide de l'organe de dosage (17) dans au moins une conduite de transport (6) ;
- au moins une soufflerie (4) permettant d'alimenter la conduite de transport (6) avec un flux d'air ;
- au moins un organe d'épandage placé en aval de la conduite de transport ; et
- au moins un dispositif de pesée (100) auquel peut être amené un type de produit à épandre défini à évacuer par actionnement de l'organe de dosage (17) sur une période de prise d'échantillon prédéfinie avec un paramètre de fonctionnement prédéfini pendant un échantillonnage d'étalonnage, pour déterminer de façon gravimétrique la masse de produit à épandre ainsi dosée ;
notamment pour mettre en œuvre un procédé selon l'une quelconque des revendications précédentes, **caractérisé en ce que** le dispositif de pesée (100) est disposé en aval de l'organe de dosage (17) et en amont du compartiment de transfert (5), dans et/ou au niveau du compartiment de transfert (5), de sorte que la masse de produit à épandre dosée pendant l'échantillonnage d'étalonnage puisse être transférée à la conduite de transport (6) et éjectée.

8. Machine d'épandage selon la revendication 7, **caractérisée en ce qu'**elle comporte en outre un dispositif de commande et/ou de réglage en liaison active tant avec le dispositif de pesée (100) qu'avec l'organe de dosage (17), ledit dispositif étant réalisé à partir de la masse de produit à épandre déterminée à l'aide du dispositif de pesée (100) par rapport à la période de prise d'échantillon et au paramètre de fonctionnement de l'organe de dosage (17) pendant l'échantillonnage d'étalonnage, pour le calcul d'une relation fonctionnelle entre le paramètre de fonctionnement de l'organe de dosage (17) et le débit massique réel ainsi dosé de produit à épandre ainsi que pour la commande et/ou le réglage subséquent de l'organe de dosage (17) en fonction de cette relation fonctionnelle en vue d'obtenir un débit massique théorique de produit à épandre.

9. Machine d'épandage selon la revendication 7 ou 8, **caractérisée en ce que** le dispositif de pesée (100) est disposé en aval de l'organe de dosage (17) et en amont du compartiment de transfert (5), le produit à épandre pouvant être amené au choix soit au dispositif de pesée (100) soit au niveau de celui-ci, après le compartiment de transfert (5) .

10. Machine d'épandage selon la revendication 9, **caractérisée en ce que** le dispositif de pesée (100) comprend un récipient de pesée (101) pouvant au choix être relié à l'organe de dosage (17), au moyen d'un dispositif d'aiguillage (102) disposé dans une conduite (21) reliant l'organe de dosage (17) au compartiment de transfert (5), ou en être retiré, le récipient de pesée (101) :
- comportant notamment au moins une cellule de pesée (103) disposée à l'intérieur ; ou
- étant découplé mécaniquement de la conduite (21) reliant l'organe de dosage (17) au compartiment de transfert (5) et étant relié à une balance à récipient (106) extérieure.

11. Machine d'épandage selon la revendication 9, **caractérisée en ce que** le dispositif de pesée (100) comporte un récipient de pesée (101) avec au moins une cellule de pesée (103) disposée à l'intérieur et disposé de façon à pouvoir pivoter par rapport à une conduite (21) reliant l'organe de dosage (17) au compartiment de transfert (5) entre au moins une position de pesée dans laquelle cette dernière débouche dans le récipient de pesée (101) et au moins une position de transfert dans laquelle le récipient de pesée (101) débouche dans le compartiment de transfert (5), le compartiment de transfert (5) :
- étant notamment disposé au niveau d'un tiroir rotatif à l'aide duquel il peut tourner entre l'au moins une position de pesée dans laquelle il est disposé à l'extérieur de la conduite (21) le reliant à l'organe de dosage (17) et l'au moins une position de transfert dans laquelle tant le récipient de pesée (101) que la conduite (21) reliant l'organe de dosage (17) au compartiment de transfert (5) débouche ; ou
- disposé de façon à pouvoir pivoter de son côté par rapport à la conduite (21) le reliant à l'organe de dosage (17) entre l'au moins une position de pesée dans laquelle il est pivoté depuis la conduite (21) le reliant à l'organe de dosage (17) et l'au moins une position de transfert dans laquelle tant le récipient de pesée (101) que la conduite (21) reliant l'organe de dosage (17) au compartiment de transfert (5) débouche.

12. Machine d'épandage selon la revendication 9, **caractérisée en ce que** le dispositif de pesée (100) comporte un récipient de pesée (101) avec au moins une cellule de pesée (103) disposée à l'intérieur et dans lequel tant le compartiment de transfert (5) que le récipient de pesée (101) sont disposés au niveau d'un tiroir linéaire (110) agissant notamment pour l'essentiel perpendiculairement à une conduite (21) reliant l'organe de dosage (17) au compartiment de transfert (5), le compartiment de transfert (5) et le récipient de pesée (101) pouvant être déplacés entre au moins une position de pesée dans laquelle la conduite (21) reliant l'organe de dosage (17) au compartiment de transfert (5) débouche dans le récipient de pesée (101) et dans laquelle le compartiment de transfert (5) est disposé à l'extérieur de la section transversale de cette conduite (21) et au moins une position de fonctionnement dans laquelle la conduite (21) reliant l'organe de dosage (17) au compartiment de transfert (5) débouche dans le compartiment de transfert (5) et dans laquelle le récipient de pesée (101) est disposé à l'extérieur de la section transversale de cette conduite (21) et en outre le récipient de pesée (101) pouvant être au choix relié au compartiment de transfert (5), notamment à l'aide d'un clapet (111), ou en être séparé.

13. Machine d'épandage selon la revendication 9, **caractérisée en ce que** le dispositif de pesée (100) :
- comporte un clapet (113) disposé dans la conduite (23) reliant l'organe de dosage (17) au compartiment de transfert (5), ledit clapet pouvant pivoter entre une position de pesée dans laquelle il ferme la section transversale de conduite et une position de fonctionnement dans laquelle il libère au moins en partie la section transversale de conduite, le clapet (113) étant équipé d'une cellule de pesée et/ou son axe de pivotement (S3) étant équipé d'un capteur de couple de rotation ou de torsion (114) ; ou
- comporte un tiroir (118) disposé dans la conduite (23) reliant l'organe de dosage (17) au compartiment de transfert (5), ledit tiroir pouvant être déplacé entre une position de pesée dans laquelle il ferme la section transversale de conduite et une position de fonctionnement dans laquelle il libère au moins en partie la section transversale de conduite, le tiroir (118) étant équipé d'une cellule de pesée.

14. Machine d'épandage selon la revendication 7 ou 8, **caractérisée en ce que** le dispositif de pesée (100) comprend une cellule de pesée (117) disposée à l'intérieur du compartiment de transfert (5), notamment au fond de son plancher, la cellule de pesée (117) pouvant notamment être dégagée et recouverte à l'aide d'un tiroir (117a) situé sur le côté intérieur.

15. Machine d'épandage selon la revendication 7 ou 8, **caractérisée en ce qu'**au moins une section inférieure du compartiment de transfert (5) est reliée à la conduite (21) reliant l'organe de dosage (17) au compartiment de transfert (5)
- à l'aide d'au moins une cellule de pesée (116) ; ou
- à l'aide d'au moins un palier pivotant pourvu d'un capteur de couple de rotation ou de torsion (115).

16. Machine d'épandage selon la revendication 14 ou 15, **caractérisée en ce que** le dispositif de commande et/ou de réglage désactive la soufflerie (4) ou la sépare du compartiment de transfert (5) ou qu'en cas de soufflerie (4) activée, un message d'avertissement est généré lorsque le dispositif de pesée (100) détecte, à l'occasion d'un échantillonnage d'étalonnage, la masse de produit à épandre ainsi dosée.

17. Machine d'épandage selon la revendication 8, **caractérisée en ce que** le dispositif de commande et/ou de réglage :
- est réalisé pour mémoriser, à partir de la masse d'un type de produit à épandre défini détectée de façon gravimétrique à l'occasion d'un échantillonnage d'étalonnage, la relation fonctionnelle obtenue par rapport à la période de prise d'échantillon et au paramètre de fonctionnement de l'organe de dosage (17), entre le paramètre de fonctionnement de l'organe de dosage (17) et le débit massique réel de produit à épandre, notamment sous la forme d'un facteur de dosage ou est relié à un dispositif de mémoire conçu à cet effet, pour pouvoir rappeler si besoin cette relation fonctionnelle, le dispositif de commande et/ou de réglage étant notamment réalisé pour actualiser la relation fonctionnelle à l'occasion de la réalisation d'un échantillonnage d'étalonnage supplémentaire ; et/ou
- est réalisé pour placer l'organe de dosage (17) dans son état de fonctionnement normal dans lequel il commande et/ou règle l'organe de dosage (17) en fonction du débit massique théorique souhaité pendant ou directement après que la masse de produit à épandre dosée à l'occasion de l'échantillonnage d'étalonnage ait été transférée et expulsée vers la conduite de transport (6) à la fin de l'échantillonnage d'étalonnage ; et/ou
- prend en outre en compte, lors de la commande et/ou du réglage de l'organe de dosage (17) pour atteindre le débit massique théorique souhaité de produit à épandre, en fonction de la relation fonctionnelle entre le paramètre de fonctionnement de l'organe de dosage (17) et la masse de produit à épandre dosée ici lors de l'échantillonnage d'étalonnage, au moins un paramètre d'épandage dans le groupe composé de la largeur de travail, de la vitesse de conduite et de la position réelle de la machine d'épandage.
